(19) Europäisches Patentamt / European Patent Office / Office européen des brevets

(11) **EP 3 605 671 A1**

(12) **EUROPEAN PATENT APPLICATION**
published in accordance with Art. 153(4) EPC

(43) Date of publication:
**05.02.2020 Bulletin 2020/06**

(21) Application number: **18775552.5**

(22) Date of filing: **31.01.2018**

(51) Int Cl.:
*H01M 4/48* (2010.01)     *H01M 4/36* (2006.01)
*H01M 4/38* (2006.01)

(86) International application number:
**PCT/JP2018/003286**

(87) International publication number:
**WO 2018/179813 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.03.2017  PCT/JP2017/012745**

(71) Applicant: HITACHI CHEMICAL COMPANY, LTD.
**Chiyoda-ku
Tokyo
100-6606 (JP)**

(72) Inventors:
• **YASUDA, Akira**
  **Tokyo 100-6606 (JP)**
• **OHSAKI, Yoshie**
  **Tokyo 100-6606 (JP)**
• **NISHIDA, Tatsuya**
  **Tokyo 100-6606 (JP)**

(74) Representative: **Beckmann, Claus
Kraus & Weisert
Patentanwälte PartGmbB
Thomas-Wimmer-Ring 15
80539 München (DE)**

(54) **NEGATIVE ELECTRODE ACTIVE MATERIAL FOR LITHIUM ION SECONDARY BATTERY, NEGATIVE ELECTRODE FOR LITHIUM ION SECONDARY BATTERY, AND LITHIUM ION SECONDARY BATTERY**

(57)    A negative electrode active material for a lithium ion secondary battery is one that includes silicon oxide particles each having carbon present on a part of a surface of or an entire surface thereof, that has a ratio $(P_{Si}/P_{SiO2})$ of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source, and that has a mean value of an aspect ratio (S/L) of its minor axis (S) to its major axis (L) of $0.45 \leq S/L \leq 1$.

FIG. 1

## Description

Technical Field

This invention relates to a negative electrode active material for a lithium ion secondary battery, a negative electrode for a lithium ion secondary battery, and a lithium ion secondary battery.

Background Art

Graphite has been mainly used currently as a negative electrode active material for a lithium ion secondary battery. It is known that graphite has a theoretical maximum discharge capacity of 372 mAh/g. In recent years, in association with an increase in the performance of mobile devices, such as cell phones, notebook computers, and tablet-type terminals, demand for development of a negative electrode active material capable of further improving capacity of a lithium ion secondary battery exists.

Having as a background the condition set forth above, it has been studied for using, as a negative electrode active material, materials having higher theoretical capacity than graphite. Among such compounds, silicon oxides, which have a higher capacity, are inexpensive, and have excellent processability, are thus particularly intensively researched in terms of applications as negative electrode active materials.

For example, Patent Literature 1 discloses a negative electrode active material, characterized in that a particle having a structure in which microcrystals of silicon are dispersed in a silicon compound is coated on the surface thereof with carbon, in which a diffraction peak derived from Si (111) is observed in x-ray diffractometry, and the silicon crystallite has a size of from 1 nm to 500 nm determined by a Scherrer method based on a half-value width of the diffraction peak.

According to the technique described in Patent Literature 1, it is regarded that, by dispersing microcrystals or microparticles of silicon in an inert robust substance such as, for example, silicon dioxide, and further fusing carbon to at least a part of the surface thereof for imparting conductivity, a structure that not only has stable surface conductivity but is also stable against volume changes of silicon associated with absorption and desorption of lithium can be obtained, as a result of which long-term stability and initial efficiency can be improved.

Patent Literature 2 discloses a negative electrode active material, characterized in that a surface of a silicon oxide particle is coated with a graphite film, in which the amount of graphite coating is from 3% by weight to 40% by weight, a BET specific surface area is from 2 $m^2$/g to 30 $m^2$/g, and the graphite film has a graphite structure-intrinsic spectrum with Raman shifts of near 1330 $cm^{-1}$ and near 1580 $cm^{-1}$ by Raman spectroscopy.

According to the technique described in Patent Literature 2, it is regarded that, by adjusting the physical property of the graphite film for coating the surface of the material capable of absorbing and desorbing a lithium ion to a specific range, a negative electrode for a lithium ion secondary battery that may achieve a property level satisfying demands of the market can be obtained.

Patent Literature 3 discloses a negative electrode active material, in which a surface of a particle of a silicon oxide represented by a formula $SiO_x$ is coated with a carbon film and the carbon film is a thermal plasma treated film.

According to the technique described in Patent Literature 3, it is regarded that a negative electrode active material with which the problems of cubical expansion of the electrode, which is a drawback of a silicon oxide, and cubical expansion of the battery due to gas generation can be solved, and which has excellent cycle characteristics can be obtained.

[Prior Art Documents]

Patent Literature 1: Japanese Patent No. 3952180
Patent Literature 2: Japanese Patent No. 4171897
Patent Literature 3: Japanese Patent Application Laid-Open (JP-A) No. 2011-90869

SUMMARY OF INVENTION

Technical Problem

In future, it will be required that a negative electrode active material to be applied to a lithium ion secondary battery suitable for improving the performance of mobile devices and the like can store a large amount of lithium ions (that is, required to have a higher capacity) as well as to desorb more lithium ions that have been stored therein. Therefore, with regard to a negative electrode active material that contributes to further improvement in the performance of a lithium ion secondary battery, improvements in both of the initial discharge capacity and the initial charge and discharge efficiency are important. In addition thereto, with regard to a negative electrode active material that contributes to further improvement in the performance of a lithium ion secondary battery, it is important that not only an initial characteristics but also suppressing capacity decrease due to repeated charge and discharge efficiency. Further, improvement in cycle characteristics is requested therefor. Furthermore, it is requested further improvement in a life of a lithium ion secondary battery, a recovery rate after charge and discharge and the like are used as indicators thereof.

The invention is made in consideration of the above demands, and an object of the invention is to provide a negative electrode active material for a lithium ion secondary battery which may improve an initial discharge capacity, an initial charge and discharge efficiency, cycle characteristics and a life of a lithium ion secondary battery, a negative electrode for a lithium ion secondary battery using the same, and a lithium ion secondary battery using the same.

Solution to Problem

The specific means to solve the problems are as follows.

<1> A negative electrode active material for a lithium ion secondary battery, the negative electrode active material comprising silicon oxide particles each having carbon present on a part of a surface of or an entire surface thereof, the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from SiO2, of from 1.0 to 2.6 when CuKa radiation with a wavelength of 0.154056 nm is employed as a radiation source, and the negative electrode active material having a mean value of an aspect ratio ($S/L$) of its minor axis ($S$) to its major axis ($L$) of from 0.45 to 1.

<2> A negative electrode active material for a lithium ion secondary battery, the negative electrode active material comprising silicon oxide particles each having carbon present on a part of a surface of or an entire surface thereof, the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from SiO2, of from 1.0 to 2.6 when CuKa radiation with a wavelength of 0.154056 nm is employed as a radiation source, and the negative electrode active material having an SD value of 5.9 $\mu$m or smaller, the SD value being calculated according to the equation set forth below using D90%, which is a particle diameter corresponding to 90% cumulative from the smaller particle diameter side in a cumulative volume distribution curve obtained by a laser diffraction/scattering method, and D10%, which is a particle diameter corresponding to 10% cumulative from the smaller particle diameter side in the cumulative volume distribution curve:

$$\text{SD value} = (\text{D90\%} - \text{D10\%}) / 2.$$

<3> A negative electrode active material for a lithium ion secondary battery, the negative electrode active material comprising silicon oxide particles each having carbon present on a part of a surface of or an entire surface thereof, the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source, and the negative electrode active material having a ratio (D10% / D90%) of 0.1 or greater, in which D90% is a particle diameter corresponding to 90% cumulative from the smaller particle diameter side in a cumulative volume distribution curve obtained by a laser diffraction/scattering method and D10% is a particle diameter corresponding to 10% cumulative from the smaller particle diameter side in the cumulative volume distribution curve.

<4> The negative electrode active material for a lithium ion secondary battery according to any one of <1> to <3>, further comprising an organic substance.

<5> The negative electrode active material for a lithium ion secondary battery according to <4>, wherein the organic substance comprises at least one selected from the group consisting of a starch derivative having $C_6H_{10}O_5$ as a unit structure thereof, a viscous polysaccharide having $C_6H_{10}O_5$ as a unit structure thereof, a water-soluble cellulose derivative having $C_6H_{10}O_5$ as a unit structure thereof, polyuronides, and a water-soluble synthetic resin.

<6> The negative electrode active material for a lithium ion secondary battery according to <4> or <5>, having a content of the organic substance of from 0.1 % by mass to 5.0 % by mass with respect to a total mass of the negative electrode active material for a lithium ion secondary battery.

<7> The negative electrode active material for a lithium ion secondary battery according to any one of <1> to <6>, further comprising a conductive particle.

<8> The negative electrode active material for a lithium ion secondary battery according to <7>, wherein the conductive particle comprises granular graphite.

<9> The negative electrode active material for a lithium ion secondary battery according to <8>, wherein the granular graphite is flat graphite.

<10> The negative electrode active material for a lithium ion secondary battery according to any one of <7> to <9>, having a content of the conductive particle of from 1.0 % by mass to 10.0 % by mass with respect to a total mass of the negative electrode active material for a lithium ion secondary battery.

<11> The negative electrode active material for a lithium ion secondary battery according to any one of <1> to <10>, having a content of the carbon of from 0.5 % by mass to 10.0 % by mass with respect to a total content of the silicon oxide particles and the carbon.

<12> A negative electrode for a lithium ion secondary battery, the negative electrode comprising: a current collector; and a negative electrode material layer that is provided on the current collector and comprises the negative electrode active material for a lithium ion secondary battery according to any one of <1> to <11>.

<13> A lithium ion secondary battery, comprising: a positive electrode; the negative electrode for a lithium ion secondary battery according to <12>; and an electrolyte.

Effects of Invention

According to the invention, there can be provided a negative electrode active material for a lithium ion secondary battery which may improve an initial discharge capacity, an initial charge and discharge efficiency, cycle characteristics and a life of a lithium ion secondary battery, a negative electrode for a lithium ion secondary battery using the same, and a lithium ion secondary battery using the same.

BRIEF DESCRIPTION OF DRAWINGS

Fig. 1 is a schematic sectional view illustrating an example of a structure of a negative electrode active material.
Fig. 2 is a schematic sectional view illustrating another example of a structure of a negative electrode active material.
Fig. 3 is a schematic sectional view illustrating another example of a structure of a negative electrode active material.
Fig. 4A is an enlarged schematic sectional view of a part of the negative electrode active material shown in Figs. 1 to 3, illustrating an aspect of the state of carbon 10 in the negative electrode active material.
Fig. 4B is an enlarged schematic sectional view of a part of the negative electrode active material shown in Figs 1 to 3, illustrating another aspect of the state of carbon 10 in the negative electrode active material.

DESCRIPTION OF EMBODIMENTS

Embodiments of the invention are described below in detail. It is noted here, however, that the invention is not restricted to the embodiments described below. In the below-described embodiments, the constituents thereof (including element steps and the like) are not indispensable unless otherwise specified. The same applies to the numerical values and ranges thereof, without restricting the invention.

In the present disclosures, the term "step" encompasses not only steps discrete from other steps but also steps which cannot be clearly distinguished from other steps, as long as the intended purpose of the step is achieved.

In the present disclosures, each numerical range specified using "(from)... to ... " represents a range including the numerical values noted before and after "to" as the minimum value and the maximum value, respectively.

In a set of numerical ranges that are stated stepwisely in the present specification, the upper limit value or the lower limit value of a numerical range may be replaced with the upper limit value or the lower limit value of other numerical range. Further, in a numerical range stated in the present specification, the upper limit value or the lower limit value of the numerical range may be replaced with a relevant value indicated in any of Examples.

In the present disclosures, each component may include plural kinds of substances corresponding to the component. When there are plural kinds of substances that correspond to a component of a composition, the indicated content ratio or amount of the component in the composition means, unless otherwise specified, the total content ratio or amount of the plural kinds of substances existing in the composition.

In the present disclosures, each component may include plural kinds of particles corresponding to the component. When there are plural kinds of particles that correspond to a component of a composition, the indicated particle diameter of the component in the composition means, unless otherwise specified, a value determined for a mixture of the plural kinds of particles existing in the composition.

In the present disclosures, the term "layer" or "film" includes, when observing a region where the layer or the film is present, a case in which the layer or the film is formed only on a part of the region in addition to a case in which the layer or the film is formed on the entirety of the region.

In the present disclosures, the term "layered" as used herein indicates that plural layers are piled up, in which two or more layers may be bonded to each other or detachable from each other.

In the present disclosures, when embodiments are explained with referring to any Figure, the embodiments are not restricted to the configuration shown in the Figure. Sizes of members shown in each of the Figures are conceptual, and relative relationship in size of the members is not restricted to that shown therein.

Negative electrode active material for Lithium Ion Secondary Battery (First Embodiment>

The negative electrode active material for a lithium ion secondary battery according to the embodiment (hereinafter, also abbreviated simply to "negative electrode active material") includes silicon oxide particles each having carbon present on a part of a surface of or an entire surface thereof. The negative electrode active material has a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source. The negative electrode active material has a mean value of an aspect ratio (S/L) of its minor axis (S) to its major axis (L) of $0.45 \leq S/L \leq 1$.

Silicon Oxide Particle

The silicon oxide which forms the silicon oxide particles included in the negative electrode active material may be any one as long as it is an oxide containing a silicon element, and examples thereof include oxidized silicon, silicon dioxide, and silicon suboxide. The silicon oxide included in the silicon oxide particles may be only one kind or a combination of two or more kinds thereof.

Among the silicon oxides, oxidized silicon and silicon dioxide are generally represented by silicon monoxide (SiO) and silicon dioxide ($SiO_2$), respectively. However, depending on the surface state (for example, presence of an oxide film) or the condition of composition generation, the silicon oxide is sometimes represented by the composition formula $SiO_x$ (x represents $0 < x \leq 2$) as an actual measured value (or a corresponding value) of an element contained, and this case is also included in the silicon oxide according to the present disclosure. Here, the value of x in the composition formula can be calculated by measuring oxygen contained in the silicon oxide by an inert gas fusion-nondispersive infrared absorption method. In a case in which a disproportionation reaction ($2SiO \rightarrow Si + SiO_2$) of the silicon oxide is associated with the manufacturing process of the negative electrode active material, the silicon oxide is sometimes represented by the state including silicon and silicon dioxide (or in some cases, oxidized silicon) in the chemical reaction, and this case is also included in the silicon oxide according to the present disclosure.

A mean particle diameter of the silicon oxide particles is not particularly limited. For example, a volume mean particle diameter thereof is preferably from 0.1 $\mu$m to 20 $\mu$m, and more preferably from 0.5 $\mu$m to 10 $\mu$m, according to a desired final size of the negative electrode material. The volume mean particle diameter of the silicon oxide particles is D50%, that is a particle diameter corresponding to 50% cumulative from the smaller particle diameter side in a volume-based particle size distribution curve. The same applies to an expression of a mean particle diameter described below. The volume mean particle diameter is measured by a laser diffraction/scattering method by the method described in Examples below.

Carbon

Carbon is present on a part or an entire of the surface of each of the silicon oxide particles. The presence of carbon on a part or an entire of the surface of the silicon oxide particle imparts conductivity to the silicon oxide particle, which is an insulator, and improves the efficiency of the charge-discharge reaction. It is considered that the initial discharge capacity and the initial charge/discharge efficiency are thus improved. Hereinafter, the silicon oxide particle in which carbon is present on a part or an entire of the surface is sometimes referred to as a "SiO-C particle".

In the present disclosure, examples of the carbon present on a part or an entire of the surface of the silicon oxide particle include graphite, amorphous carbon, and the like. It is noted that an organic substance described below does not fall under the "carbon" in the present disclosure.

The manner in which the carbon is present on a part or an entire of the surface of the silicon oxide particle is not particularly limited. For example, continuous or discontinuous coating and the like can be mentioned.

The presence or absence of carbon in the negative electrode active material for a lithium ion secondary battery can be observed by, for example, laser Raman spectroscopy at an excitation wavelength of 532nm or the like.

A content of the carbon is preferably from 0.5 % by mass to 10.0 % by mass in a total content of a mass of the silicon oxide particles and a mass of the carbon. With such a configuration, the initial discharge capacity and the initial charge/discharge efficiency tend to be further improved. The content of the carbon is more preferably from 1.0 % by mass to 9.0 % by mass, more preferably from 2.0 % by mass to 8.0 % by mass, and particularly preferably from 3.0 % by mass to 7.0 % by mass.

A content ratio (in terms of mass) of the carbon can be determined by, for example, a high-frequency furnace combustion-infrared absorption spectrometry. For example, in the high-frequency furnace combustion-infrared absorption spectrometry, a sulfur/carbon simultaneous analyzer (CSLS600, manufactured by LECO Japan Corporation) may be used. When the negative electrode active material contains the organic substance described below, the content ratio of the carbon can be measured by removing from the negative electrode active material, in advance, a to-be-decreased mass derived from the organic substance by heating the negative electrode active material to a temperature which is higher than a temperature at which the organic substance degrades (for example, at 300°C).

The carbon is preferably a carbon with low crystallinity. In the present disclosure, the expression that the carbon is with "low crystallinity" means that an R value of a negative electrode active material obtained by the following method is 0.5 or more.

The R value of a negative electrode active material means a peak intensity ratio Id/Ig (also referred to as D/G), in which Id is a peak intensity at around 1360 cm$^{-1}$ and Ig is a peak intensity at around 1580 cm$^{-1}$, in a profile of a laser Raman spectrum measurement with a wavelength of 532 nm.

Here, the peak at around 1360 cm$^{-1}$ is a peak that is generally identified as corresponding to an amorphous structure, and for example it is a peak observed at from 1300 cm$^{-1}$ to 1400 cm$^{-1}$. The peak at around 1580 cm$^{-1}$ is a peak that generally identified as corresponding to the graphite crystal structure, and for example it is a peak observed at from 1530 cm$^{-1}$ to 1630 cm$^{-1}$.

The R value can be determined using a Raman spectrum measuring apparatus (for example, NSR 1000 manufactured by JASCO Corporation) with setting a baseline to 1050 cm$^{-1}$ to 1750 cm$^{-1}$ with respect to a measurement range (from 830 cm$^{-1}$ to 1940 cm$^{-1}$).

The R value of the negative electrode active material is preferably from 0.5 to 1.5, more preferably from 0.7 to 1.3, and still more preferably from 0.8 to 1.2. When the R value is from 0.5 to 1.5, the surface of the silicon oxide particle is sufficiently covered with low-crystallinity carbon in which carbon crystallites are randomly oriented, so that the reactivity with the electrolyte solution can be reduced and the cycle characteristics tend to be improved.

A method of applying carbon to a surface of the silicon oxide particle is not particularly limited. Specific examples thereof include a wet mixing method, a dry mixing method, a chemical vapor deposition method and the like. From the viewpoints of application of carbon with further uniformity, easiness of the control of a reaction system and easiness of maintaining the shape of the negative electrode active material, the wet mixing method and the dry mixing method are preferable.

When the application of carbon is performed by way of the wet mixing method, examples thereof include a method which includes mixing the silicon oxide particles with a substance in which a raw material of carbon (a carbon source) is dissolved or dispersed in a solvent, attaching the carbon source solution to the surfaces of the silicon oxide particles, removing the solvent if needed, and then subjecting the resultant to a heat treatment in an inert atmosphere to carbonize the carbon source.

When the application of carbon is performed by way of the dry mixing method, examples thereof include a method in which a mixture is prepared by mixing the silicon oxide particles in a solid state and the carbon source in a solid state, and the mixture is subjected to a heat treatment in an inert atmosphere to carbonize the carbon source. A treatment for imparting mechanical energy (such as a mechanochemical treatment) may be performed when mixing the silicon oxide particles with the carbon source.

When the application of carbon is performed by way of the chemical vapor deposition method, a known method may be used. For example, the silicon oxide particles are subjected to a heat treatment in an atmosphere containing vaporized gas of the carbon source to carbonize the carbon source, thereby applying carbon to the surfaces of the silicon oxide particles.

When carbon is applied to the surfaces of the silicon oxide particles by the wet mixing method or the dry mixing method, the carbon source to be used is not particularly limited as long as it is a material which can be changed to carbon by the heat treatment. Specific examples thereof include polymer compounds such as a phenol resin, a styrene resin, polyvinyl alcohol, polyvinyl chloride, polyvinyl acetate, or polybutyral; pitch such as ethylene heavy end pitch, coal pitch, petroleum pitch, coal tar pitch, asphalt decomposition pitch, PVC pitch obtained by pyrolyzing polyvinyl chloride or the like, or naphthalene pitch prepared by polymerizing naphthalene or the like under the presence of a super-strong acid; and polysaccharides such as starch or cellulose. The carbon source to be used may be only one kind or a combination of two or more kinds thereof.

When carbon is applied to the surfaces of the silicon oxide particles by the chemical vapor deposition method, the carbon source to be used may be an aliphatic hydrocarbon, an aromatic hydrocarbon, an alicyclic hydrocarbon or the like, and preferably a compound in the form of a gas or a compound which can be easily made into a gas. Specific examples thereof include methane, ethane, propane, toluene, benzene, xylene, styrene, naphthalene, cresol, anthracene, and derivatives thereof. The carbon source to be used may be only one kind or a combination of two or more kinds thereof.

The heat treatment temperature for carbonizing the carbon source is not particularly limited as long as carbonization of the carbon source can be achieved at the temperature. The heat treatment temperature is preferably 700°C or higher, more preferably 800°C or higher, still more preferably higher than 850°C, and even more preferably 900°C or higher. From the viewpoints of obtaining a carbon with low crystallinity and producing the silicon crystallite having a desired size by the disproportionation reaction described below, the heat treatment temperature is preferably 1300°C or lower, more preferably 1200°C or lower, and still more preferably 1100°C or lower.

The duration of the heat treatment for carbonizing the carbon source may be selected according to the kind, amount and the like of the carbon source to be used. For example, the duration of the heat treatment is preferably from 1 hour to 10 hours, and more preferably from 2 hours to 7 hours.

The heat treatment for carbonizing the carbon source is preferably performed in an inert atmosphere such as nitrogen or argon. The heat treatment apparatus is not particularly limited, and examples thereof include a heating apparatus applicable to a continuous or batch treatment. Specifically, it may be selected from a fluidized bed-furnace, a revolving furnace, a vertical moving bed furnace, a tunnel furnace, a batch furnace or the like.

When plural particles in the heat-treated product obtained by the heat treatment form aggregates, a disintegration treatment may be further performed. When the adjustment of the mean particle diameter to an intended size is required, a pulverization treatment may further be performed.

(X-ray diffraction peak intensity ratio)

The negative electrode active material has an X-ray diffractive peak intensity ratio ($P_{Si}/P_{SiO2}$) ranging from 1.0 to 2.6. The X-ray diffraction peak intensity ratio ($P_{Si}/P_{SiO2}$) is a ratio of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, found when CuKa radiation having a wavelength of 0.15406 nm is used as a radiation source.

The ratio ($P_{Si}/P_{SiO2}$) of the X-ray diffractive peak intensities of the negative electrode active material may be a value measured in a state where carbon, the organic substance, a conductive particle, or the like adhere to the silicon oxide particles, or a value measured in a state where these do not adhere to the silicon oxide particles.

Examples of the negative electrode active material having the ratio of the intensities of X-ray diffracted peaks ($P_{Si}/P_{SiO2}$) ranging from 1.0 to 2.6 include a negative electrode active material containing a silicon oxide particle having a structure in which crystallites of silicon are present in the silicon oxide.

The silicon oxide particle having a structure in which silicon crystallites are dispersed in silicon oxide can be produced, for example, by causing disproportionation reaction of silicon oxide ($2SiO \rightarrow Si + SiO_2$) to generate silicon crystallites in the silicon oxide particle. By controlling the degree of formation of silicon crystallites in the silicon oxide particle, the ratio of the X-ray diffraction peak intensities can be controlled to a desired value.

An advantage of achiving the presence of silicon crystallites in the silicon oxide particle by way of the disproportionation reaction of silicon oxide can be considered as follows. The above-mentioned $SiO_x$ (x is $0<x\leq2$) tends to be inferior in the initial charge/discharge characteristics because lithium ions are trapped at the time of initial charge. This occurs because lithium ions are trapped by dangling bonds (unshared electron pair) of oxygen present in the amorphous $SiO_2$ phase. Therefore, it is considered that suppressing generation of dangling bonds of active oxygen atoms by reconstructing the amorphous $SiO_2$ phase by heat treatment is preferable from the viewpoint of improvement in charge-discharge characteristics.

When the ratio ($P_{Si}/P_{SiO2}$) of the intensities of the X-ray diffraction peaks of the negative electrode active material is less than 1.0, the crystallites of silicon in the silicon oxide particle do not grow sufficiently and the ratio of $SiO_2$ becomes large, so that the initial discharge capacity is small and the charge/discharge efficiency tends to be lowered by irreversible reactions. On the other hand, when the ratio ($P_{Si}/P_{SiO2}$) exceeds 2.6, the crystallites of the generated silicon are too large to relieve expansion and contraction, which tends to cause a decrease in the initial discharging capacity. From the viewpoint of obtaining a negative electrode active material excellent in charge-discharge characteristics, the ratio ($P_{Si}/P_{SiO2}$) is preferably in the range of from 1.5 to 2.0.

The ratio of the intensities of the X-ray diffracted peaks of the negative electrode active material ($P_{Si}/P_{SiO2}$) can be controlled by, for example, the condition of the heat treatment for causing the disproportionation reaction of the silicon oxide. For example, by increasing the temperature of the heat treatment or increasing the heat treatment time, the generation and enlargement of silicon crystallites are promoted, and the ratio of the X-ray diffraction peak intensities can be increased. On the other hand, by lowering the temperature of the heat treatment or shortening the heat treatment time, the generation of silicon crystallites can be suppressed, and the ratio of the X-ray diffraction peak intensities can be reduced.

When the silicon oxide particle is prepared by disproportionation reaction of silicon oxide, silicon oxide to be used as a raw material may be obtained, for example, by a known sublimation technique in which a silicon monoxide gas produced by heating a mixture of silicon dioxide and a metal silicon is cooled and precipitated. Alternatively, it is commercially available as oxidized silicon, silicon monoxide or the like.

Whether or not silicon crystallites are present in the silicon oxide particle may be observed, for example, by a powder X-ray diffraction (XRD) measurement. When silicon crystallites are present in the silicon oxide particle, a diffraction peak derived from Si (111) is observed near $2\theta=28.4°$ at a time of performing a powder X-ray diffraction (XRD) measurement using CuKa radiation with a wavelength of 0.154056 nm as a radiation source.

When silicon crystallites are present in the silicon oxide particle, a crystallite size of the silicon crystallite is preferably 8.0 nm or less, and more preferably 6.0 nm or less. When the silicon crystallite size is 8.0 nm or less, the silicon crystallite is not apt to localize in a silicon oxide particle but rather apt to disperse in an entire of the silicon oxide particle. Therefore, lithium ions can diffuse easily in the silicon oxide particle so as to facilitate achievement of excellent discharge capacity. Further, the silicon crystallite size of silicon is preferably 2.0 nm or more, and more preferably 3.0 nm or more. When the crystallite size is 2.0 nm or more, a reaction between a lithium ion and a silicon oxide of can be well controlled so as to facilitate achievement of excellent charge and discharge efficiency.

The size of the silicon crystallite is a size of a single crystal of silicon included in the silicon oxide particle and can be determined using the Scherrer equation based on the half width of a diffraction peak near $2\theta=28.4°$ derived from Si (111) obtained by a powder X-ray diffraction analysis using a radiation source of the CuKa radiation having a wavelength of 0.154056 nm.

A method to generate the silicon crystallite in the silicon oxide particle is not particularly limited. For example, it can be generated by subjecting the silicon oxide particle to a heat treatment in a temperature range of from 700°C to 1300°C under an inert atmosphere to cause the disproportionation ($2SiO \rightarrow Si+SiO_2$). The heat treatment to cause disproportionation may be performed as the same step as that for the heat treatment to provide carbon to a surface of the silicon oxide particle.

The heat treatment conditions for causing the disproportionation reaction of the silicon oxide can be, for example, performance with the silicon oxide in an inert atmosphere in a temperature range of 700° C to 1300° C, preferably in a temperature range of 800° C to 1200° C. From the viewpoint of generating a silicon crystallite with a desired size, the heat treatment temperature is preferably over 900° C, and more preferably equal to or higher than 950° C. The heat treatment temperature is preferably less than 1150° C, and more preferably equal to or lower than 1100° C.

Mean aspect ratio

The negative electrode active material has a mean value (mean aspect ratio) of an aspect ratio, which is represented by the ratio (S/L) of the major axis L and the minor axis S, of from $0.45 \leq S/L \leq 1$.

In general, when silicon oxide is used as a negative electrode active material, a large volume change occurs due to insertion and desorption of lithium ions during charge and discharge. Therefore, when the charging and discharging is repeated, the silicon oxide particles are cracked and micronized, and the electrode structure of the negative electrode using the silicon oxide particles is also destroyed and the conductive path may be cut. In the present embodiment, by setting the mean aspect ratio of the negative electrode active material to be within the range of $0.45 \leq S/L \leq 1$, the difference in volume change amount between the expanded state and the contracted state as the electrode is averaged, and collapse of the electrode structure is suppressed. It is considered that as a result thereof conduction between adjacent particles becomes easy to be achieved even if the silicon oxide particles expand and contract.

The mean aspect ratio of the negative electrode active material is in the range of $0.45 \leq S/L \leq 1$, preferably in the range of $0.55 \leq S/L \leq 1$, and more preferably in the range of $0.65 \leq S/L \leq 1$. When the mean aspect ratio of the negative electrode active material is 0.45 or more, there is a tendency that the difference in volume change amount for each region due to expansion and contraction as an electrode is small, and the deterioration of cycle characteristics is suppressed.

The aspect ratio of the negative electrode active material is measured by an observation using a scanning electron microscope (Scanning Electron Microscope, SEM). The mean aspect ratio is calculated as an arithmetic mean value of the aspect ratios obtained by arbitrarily selecting 100 particles from an SEM image and measuring each of these particles.

The ratio (S/L) of the major axis L to the minor axis S of the measurement target particle means the ratio of the minor axis (minimum diameter) / major axis (maximum diameter) for a spherical particle, and the ratio of the minor axis (minimum diameter or minimum diagonal length) / major axis (maximum diameter or maximum diagonal length) for a hexagonal plate-shaped or disk-shaped particle in the projected image of the particle observed from the thickness direction (observed with a surface corresponding to the thickness facing the front surface) respectively.

When the negative electrode active material contains a conductive particle described below, the conductive particle is excluded from the target of measurement of the mean aspect ratio.

When the negative electrode active material is obtained through a heat treatment for a disproportionation reaction of silicon oxide, there may be a case that individual particles are agglomerated. It is meant that particles used in the calculation of the mean aspect ratio in this case are particles of the smallest unit (primary particles) that can exist alone as particles.

The value of the mean aspect ratio of the negative electrode active material can be adjusted by, for example, pulverizing conditions in manufacturing the negative electrode active material. A generally known pulverizer can be used for pulverizing the negative electrode active material, and a pulverizer which can apply mechanical energy such as shear force, impact force, compression force, frictional force or the like can be used without any particular limitation. Examples of the pulverizer include a pulverizer (ball mill, bead mill, vibration mill or the like) which pulverizes using impact force and friction force by kinetic energy of pulverizing media, a pulverizer (jet mill or the like) which pulverizes raw material particles by effects of impact and friction among particles caused by jetting high pressure gas of several or more atmospheric pressures from a jetting nozzle and accelerating the raw material particles by this jet air flow, and a pulverizer (hammer mill, pin mill, disc mill or the like) which pulverizes raw material particles by applying impact to the raw material particles by a high-speed rotating hammer, a pin, or a disc.

When the negative electrode active material is obtained through a pulverizing step, the particle size distribution may be adjusted by performing a classification process after pulverizing. A method of the classification is not particularly limited, and can be selected from dry classification, wet classification, sieving or the like. From the viewpoint of productivity, it is preferable to perform pulverization and classification collectively. For example, a coupling system of jet mill and cyclone allows the particles to be classified prior to re-agglomeration to conveniently obtain the shape having desired particle size distribution.

When necessary, for example, when the aspect ratio of the negative electrode active material cannot be adjusted to a desired range only by the pulverizing treatment, the negative electrode active material may be further subject to a surface modification treatment after the pulverization to adjust the aspect ratio. An apparatus for performing the surface modification treatment is not particularly limited. Examples thereof include mechanofusion systems, NOBILTA, hybridization systems and the like.

Mean particle size

A mean particle diameter of the negative electrode active material is not particularly limited. For example, the volume mean particle diameter is preferably from $0.1\mu m$ to $20\mu m$, and more preferably $0.5\mu m$ to $10\mu m$. The volume mean particle diameter of the negative electrode active material is D50%, that is a particle diameter corresponding to 50% cumulative volume from the small diameter side in a volume-based particle size distribution curve. For the measurement of the volume mean particle diameter, a known method such as a laser diffraction particle size distributor can be employed.

The negative electrode active material may have an SD value, which is to be described below, of 5.9 $\mu m$ or less, preferably 5.0 $\mu m$ or less, and more preferably 2.5 $\mu m$ or less. When the SD value of the negative electrode active material is 5.9 $\mu m$ or less, a difference in a volume change amount due to expansion and contraction when forming an electrode becomes small, and deterioration of the cycle characteristic is suppressed. The lower limit value of the SD value of the negative electrode active material is not particularly limited, while it is preferably 0.10 $\mu m$ or more from the viewpoint of manufacturing.

The negative electrode active material may have a ratio (D10%/D90%) of D10% to D90%, which is to be described below, of 0.1 or more, preferably 0.2 or more, and more preferably 0.3 or more. When the value of D10%/D90% of the negative electrode active material is 0.1 or more, a difference in an amount of change in expansion and contraction when forming an electrode becomes small, and deterioration of the cycle characteristic tends to be suppressed. The ratio D10%/D90% of the negative electrode active material may be 1.0 or less, preferably 0.8 or less, and more preferably 0.6 or less.

Specific surface area

A specific surface area of the negative electrode material is preferably from 0.1 $m^2/g$ to 15 $m^2/g$, more preferably from 0.5 $m^2/g$ to 10 $m^2/g$, further preferably from 1.0 $m^2/g$ to 7.0 $m^2/g$, and particularly preferably from 1.0 $m^2/g$ to 4.0 $m^2/g$. When the specific surface area of the negative electrode material is 15 $m^2/g$ or less, increase in the initial irreversible capacity of a lithium ion secondary battery produced therewith tends to be suppressed. Further, increase in the consumption of a binder for producing a negative electrode can be suppressed. When the specific surface area of the negative electrode material is 0.1 $m^2/g$ or more, the contact area of the negative electrode material with an electrolyte solution is sufficiently made and the charge/discharge efficiency tends to increase. Measurement of the specific surface area can be performed by a conventionally known method such as a BET method (a nitrogen gas adsorption method) or the like.

Powder electric resistance

A powder electric resistance of the negative electrode active material at a pressure of 10MPa is preferably 100 $\Omega \cdot$cm or less, more preferably 80 $\Omega \cdot$cm or less, and still more preferably 50 $\Omega \cdot$cm or less. When the powder electrical resistance is 100 $\Omega \cdot$cm or less, movement of electrons during charge and discharge is hardly inhibited, and occlusion and release of lithium are apt to occur, which leads superior cycle characteristics. The powder electric resistance of the negative electrode active material can be measured using, for example, a powder electric resistance device (type MSP-PD51, 4 probes, Mitsubishi Chemical Analytech Co., Ltd.). The powder electric resistance of the negative electrode active material at a pressure of 10 MPa may be 0.1 $\Omega \cdot$cm or more, preferably 1 $\Omega \cdot$cm or more, and more preferably 10 $\Omega \cdot$cm or more.

From the viewpoint of reducing the powder electric resistance value of the negative electrode active material, it is preferable that the negative electrode active material contains a conductive particle to be described below. The conductive particle adheres to the surface of the SiO-C particle to form a protrusion structure, thereby reducing the resistivity of the entire negative electrode active material.

Organic substance

The negative electrode active material may contain an organic substance. When the negative electrode active material contains an organic substance, the initial discharge capacity, the initial charge/discharge efficiency, and the recovery rate after charge/discharge tend to be further improved. This is considered to be because inclusion of an organic substance causes reduction of the specific surface area of the negative electrode active material to result in suppression of the reaction of the negative electrode active material with the electrolyte solution. The organic substance contained in the negative electrode active material may be only one kind or two or more kinds thereof.

A content of the organic substance is preferably from 0.1 mass % to 5.0 mass % with respect to the total mass of the negative electrode active material. When the content of the organic substance is within the above range, the effect of improving the recovery rate after charging and discharging tends to be sufficiently obtained while suppressing the decrease in conductivity. The content of the organic substance with respect to the total mass of the negative electrode active material is more preferably from 0.2 mass % to 3.0 mass %, and further preferably from 0.3 mass % to 1.0 mass %.

Whether or not the negative electrode active material contains the organic substance can be observed by, for example, heating the negative electrode active material which is sufficiently dried to a temperature equal to or higher than the temperature at which the organic substance decomposes but lower than a temperature at which carbon decomposes, for example, 300° C, and measuring a mass of the negative electrode active material after the organic substance decomposes. Specifically, it can be determined that the negative electrode active material contains the organic substance if the rate of change in mass represented by $\{(A-B)/A\} \times 100$ is 0.1% or more, provided that the mass of the negative electrode active material before heating is A(g) and the mass of the negative electrode active material after heating is B(g).

The rate of change in mass is preferably from 0.1% to 5.0%, and more preferably 0.3% to 1.0%. When the rate of change is 0.1% or more, a sufficient quantity of the organic substance exists on a surface of the SiO-C particle, so that the effects of inclusion of the organic substance tend to be sufficiently obtained.

The kind of the organic substance is not particularly limited. For example, at least one selected from the group consisting of a starch derivative having $C_6H_{10}O_5$ as a unit structure thereof, a viscous polysaccharide having $C_6H_{10}O_5$ as a unit structure thereof, a water-soluble cellulose derivative having $C_6H_{10}O_5$ as a unit structure thereof, polyuronides, and a water-soluble synthetic resin can be mentioned.

Specific examples of the starch derivative having $C_6H_{10}O_5$ as a unit structure thereof include hydroxyalkyl starches such as acetic acid starch, phosphate starch, carboxymethyl starch, and hydroxyethyl starch. Specific examples of the viscous polysaccharide having $C_6H_{10}O_5$ as a unit structure thereof include pullulan, dextrin, and the like. Specific examples of the water-soluble cellulose derivatives having $C_6H_{10}O_5$ as a unit structure thereof include carboxymethylcellulose, methylcellulose, hydroxyethylcellulose, hydroxypropylcellulose and the like. Examples of the polyuronide include pectic acid, alginic acid and the like. Examples of the water-soluble synthetic resin include a water-soluble acrylic resin, a water-soluble epoxy resin, a water-soluble polyester resin, a water-soluble polyamide resin and the like, and more specific examples thereof include polyvinyl alcohol, polyacrylic acid, polyacrylic acid salt, polyvinyl sulfonic acid, polyvinyl sulfonic acid salt, poly 4-vinyl phenol, poly 4-vinyl phenol salt, polystyrene sulfonic acid, polystyrene sulfonic acid salt, polyaniline sulfonic acid and the like. The organic substance may be used in a form of a metal salt, an alkylene glycol esters or the like.

From the viewpoint of reducing the specific surface area of the negative electrode active material, it is preferable that the organic substance is in a state in which a part or an entire of the SiO-C particle (when the conductive particle to be described below is present on the surface of the SiO-C particle, the surface thereof) is coated.

There are no particular restrictions on the manner in which the organic substance is present on a part or an entire of the surface of the SiO-C particle. For example, the organic substance can be attached to the SiO-C particle by introducing the SiO-C particle into a liquid in which the organic substance is dissolved or dispersed and agitating the liquid as required. Thereafter, the SiO-C particle to which the organic substance adheres are taken out from the liquid and dried as required, whereby SiO-C particle to which the organic substance adheres can be obtained.

In the above method, a temperature of the liquid at the time of agitating is not particularly limited, and can be selected, for example, from 5° C to 95° C. A temperature at the time of drying is not particularly limited, and can be selected, for example, from 50° C to 200° C. A content of the organic substance in the solution is not particularly limited, and can be selected, for example, from 0.1 mass % to 20 mass %.

Conductive particle

The negative electrode active material may contain a conductive particle. When the negative electrode active material contains the conductive particle, conduction can be easily made by the conductive particles coming into contact with each other even if expansion and contraction of the silicon oxide particles occur. In addition, the resistance value of the entire negative electrode active material tends to be reduced. As a result, a decrease in capacity due to repetition of charge and discharge is suppressed, and the cycle characteristics tend to be satisfactorily maintained.

From the viewpoint of ensuring electrical continuity via contacts of the negative electrode active materials with each other, it is preferable that the conductive particle exists on the surface of the SiO-C particle. Hereinafter, the particle in which the conductive particle is present on a surface of the SiO-C particle is sometimes referred to as a "CP/SiO-C particle".

The kind of the conductive particle is not particularly limited. For example, at least one selected from the group consisting of granular graphite and carbon black is preferable, and granular graphite is preferable from the viewpoint of improving cycle characteristics. Examples of the granular graphite include particles of artificial graphite, particles of natural graphite, and particles of MC (mesophase carbon). Examples of the carbon black include acetylene black, Ketjen black, thermal black, furnace black and the like, and acetylene black is preferable from the standpoint of conductivity.

The granular graphite preferably has higher crystallinity than carbon present on the surface of the silicon oxide particles from the viewpoint of improving both the battery capacity and the charge/discharge efficiency. Specifically, the particulate graphite preferably has a mean interplanar spacing ($d_{002}$) measured according to the Gakushin method of from 0.335 nm to 0.347 nm, more preferably from 0.335nm to 0.345 nm, more preferably from 0.335nm to 0.340 nm, and particularly preferably from 0.335 nm to 0.337 nm. When the mean interplanar spacing of the granular graphite is 0.347 nm or less, the crystallinity of the granular graphite is high, and both the battery capacity and the charge/discharge efficiency tend to be improved. On the other hand, since the theoretical value of the graphite crystal is 0.335nm, both the battery capacity and the charge/discharge efficiency tend to be improved when the mean interplanar spacing of the granular graphite is close to this value.

The shape of the granular graphite is not particularly limited and it may be flat graphite or spherical graphite. From the standpoint of improving cycle characteristics, flat graphite is preferable.

Flat graphite in the present disclosure means graphite an aspect ratio of which is not 1, i.e., the length of the minor axis and the length of the major axis thereof are not equal. Examples of the flat graphite include graphite having a shape of a scale, a flake, a lump or the like.

The aspect ratio of the conductive particle is not particularly limited, while from the viewpoint of easiness of ensuring the conduction between the conductive particles and improvement in cycle characteristics, a mean value of the aspect ratio is preferably 0.3 or less, and more preferably 0.2 or less. A mean value of the aspect ratio of the conductive particle is preferably 0.001 or more, and more preferably 0.01 or more.

The aspect ratio of the conductive particle is a value measured by observation with an SEM. Specifically, it is a value calculated as B/A provided that a length in the major axis direction is A and a length in the minor axis direction (in the case of flat graphite, the length in the thickness direction) is B for each of 100 arbitrarily selected conductive particles in a SEM image. The mean value of the aspect ratio is an arithmetic mean value of the aspect ratio of 100 conductive particles.

The conductive particle may be a primary particle (single particle) or a secondary particle (granulated particle) formed from a plurality of primary particles. The flat graphite may be a porous graphite particle.

A content of the conductive particle with respect to a total mass of the negative electrode active material is preferably from 1.0% by mass to 10.0% by mass, more preferably 2.0% by mass to 9.0% by mass, and still more preferably 3.0% by mass to 8.0% by mass, from the viewpoint of improving the cycle characteristics.

The content of the conductive particle can be determined by, for example, a high-frequency furnace combustion-infrared absorption spectrometry. In the high-frequency furnace combustion-infrared absorption spectrometry, for example, a sulfur/carbon simultaneous analyzer (CSLS600, Japan LECO Co., Ltd.) can be used. Since this measurement provides a result including a content of carbon in the SiO-C particle, the content of carbon may be separately measured and subtracted from the obtained content.

A method for manufacturing the negative electrode active material containing the conductive particle is not particularly limited, while a wet method and a dry method can be mentioned.

Examples of a method of producing the negative electrode active material containing a conductive particle by a wet method include a method which includes adding the SiO-C particle to a particle dispersion liquid in which conductive particles are dispersed in a dispersion medium, agitating the particle dispersion liquid, and then removing the dispersion medium using a dryer or the like. The dispersion medium used therein is not particularly limited, and water, an organic solvent or the like can be used. The organic solvent may be a water-soluble organic solvent such as an alcohol or may be a water-insoluble organic solvent. The dispersing medium may contain a dispersant from the viewpoint of enhancing dispersibility of the conductive particles and increasing uniform adherence of the conductive particles to the surface of the SiO-C particle. The dispersant can be selected according to the type of dispersion medium used. For example, when the dispersion medium is a water-based medium, carboxymethylcellulose is preferable as the dispersant from the viewpoint of dispersion stability.

Examples of a method of producing the negative electrode active material containing the conductive particle by the dry method include a method which includes adding the conductive particle together with a carbon source for carbon when the carbon source is applied to a surface of the silicon oxide particle. Specific examples thereof include a method including mixing the carbon source and the conductive particle with the silicon oxide particle and applying mechanical energy (for example, a mechanochemical treatment).

If necessary, classification of the obtained negative electrode active material may be further performed. The classification process can be performed using a sieving machine or the like.

Negative electrode active material for Lithium Ion Secondary Battery (Second Embodiment>

The negative electrode active material for a lithium ion secondary battery according to the embodiment includes silicon oxide particles each having carbon present on a part of a surface of or an entire surface thereof. The negative electrode active material has a ratio ($P_{Si}/P_{SiO2}$) of an intensity of an X-ray diffraction peak at $2\theta$ of from 27° to 29° derived from Si to an intensity of an X-ray diffraction peak at $2\theta$ of from 20° to 25° derived from $SiO_2$ of from 1.0 to 2.6 when CuKa radiation with a wavelength of 0.154056 nm is employed as a radiation source. The negative electrode active material has an SD value of 5.9 $\mu$m or smaller, the SD value being calculated according to the equation of SD value = (D90% - D10%) / 2 using D90%, which is a particle diameter corresponding to 90% cumulative from the smaller particle diameter side in a cumulative volume distribution curve obtained by a laser diffraction/scattering method and D10%, which is a particle diameter corresponding to 10% cumulative from the smaller particle diameter side in the cumulative volume distribution curve.

Details and preferable aspects of the negative electrode active material of the second embodiment and its components are the same as the details and preferable aspects of the negative electrode active material of the first embodiment and its components.

The SD value of the negative electrode active material is 5.9 $\mu$m or less, preferably 5.0 $\mu$m or less, and more preferably 2.5$\mu$m or less. When the SD value of the negative electrode active material is 5.9$\mu$m or less, a difference in an amount of change in expansion and contraction when forming an electrode becomes small, and the deterioration of the cycle characteristic is suppressed. The lower limit value of the SD value of the negative electrode active material is not particularly limited, while it is preferably 0.10 $\mu$m or more from the viewpoint of manufacturing.

The SD value of the negative electrode active material is an index relating to the width and narrowness of a particle size distribution of the negative electrode active material, and a small SD value means that the particle size distribution of the negative electrode active material is narrow.

The D90% and D10% of the negative electrode active material are respectively obtained as a particle diameter when the cumulative volume from the small particle diameter side is 90% and a particle diameter when the cumulative volume from the small particle diameter side is 10% in a volume-based particle size distribution measured by a laser diffraction/scattering method using a sample in which the negative electrode active material is dispersed in water.

Negative electrode active material for Lithium Ion Secondary Battery (Third Embodiment>

The negative electrode active material for a lithium ion secondary battery according to the embodiment includes silicon oxide particles each having carbon present on a part of a surface of or an entire surface thereof. The negative electrode active material has a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source. The negative electrode active material has a ratio (D10% / D90%) of 0.1 or greater, in which D90% is a particle diameter corresponding to 90% cumulative from the smaller particle diameter side in a cumulative volume distribution curve obtained by a laser diffraction/scattering method and D10% is a particle diameter corresponding to 10% cumulative from the smaller particle diameter side in the cumulative volume distribution curve.

Details and preferable aspects of the negative electrode active material of the third embodiment and its components are the same as the details and preferable aspects of the negative electrode active material of the first embodiment and its components.

The negative electrode active material may have a ratio (D10%/D90%) of D10% to D90% of 0.1 or more, preferably 0.2 or more, and more preferably 0.3 or more. When the value of D10%/D90% of the negative electrode active material is 0.1 or more, a difference in an amount of change in expansion and contraction when forming an electrode becomes small, and deterioration of the cycle characteristic tends to be suppressed. The ratio D10%/D90% of the negative electrode active material may be 1.0 or less, preferably 0.8 or less, and more preferably 0.6 or less.

The value of D10%/D90% of the negative electrode active material is an index relating to the width and narrowness of a particle size distribution of the negative electrode active material, and a large value of D10%/D90% means that the particle size distribution of the negative electrode active material is narrow.

The D90% and D10% of the negative electrode active material are respectively obtained as a particle diameter when the cumulative volume from the small particle diameter side is 90% and a particle diameter when the cumulative volume from the small particle diameter side is 10% in a volume-based particle size distribution measured by a laser diffraction/scattering method using a sample in which the negative electrode active material is dispersed in water.

An example of a configuration of the negative electrode active material is explained hereinafter with referring to the Figures.

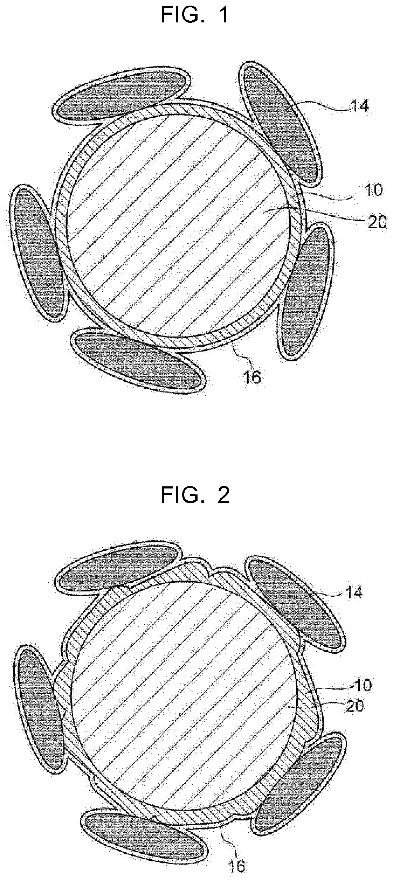

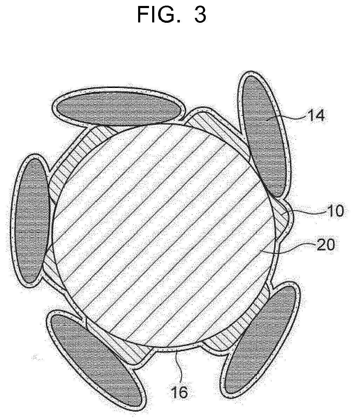

Figs. 1 to 3 are schematic sectional views illustrating examples of the structure of the negative electrode active material, respectively. In Fig.1, carbon 10 covers an entire surface of a silicon oxide particle 20. In Fig. 2, carbon 10 covers, but not uniformly, the entire surface of a silicon oxide particle 20. In Fig. 3, carbon 10 is present on a part of a surface of a silicon oxide particle 20, and thus the surface of the silicon oxide particle 20 is partially exposed. In Figs. 1 to 3, conductive particles 14 are present on the surface of a SiO-C particle, that is the silicon oxide particle 20 on the surface of which carbon 10 attaches in such a state as described above. Further, the surface of the silicon oxide particle 20 having the conductive particles 14 on the surface (CP/SiO-C particle) is covered with an organic substance 16.

While the shape of the silicon oxide particle 20 is schematically indicated by a spherical shape (a circle as the cross-sectional shape) in Figs. 1 to 3, the shape may be a spherical shape, a block-like shape, a scale-like shape, a shape cross-section of which has a polygonal shape (an angular shape), or the like. While the shape of each of the conductive particles 14 is indicated by a flat shape in Figs. 1 to 3, the shape is not limited thereto. While an entire surface of the silicon oxide particle 20 on the surface of which carbon 10 are present (SiO-C particle) is covered with the organic substance 16 in Figs. 1 to 3, it is not limited thereto, and only a part of the surface of the SiO-C particle may be covered with the organic substance 16.

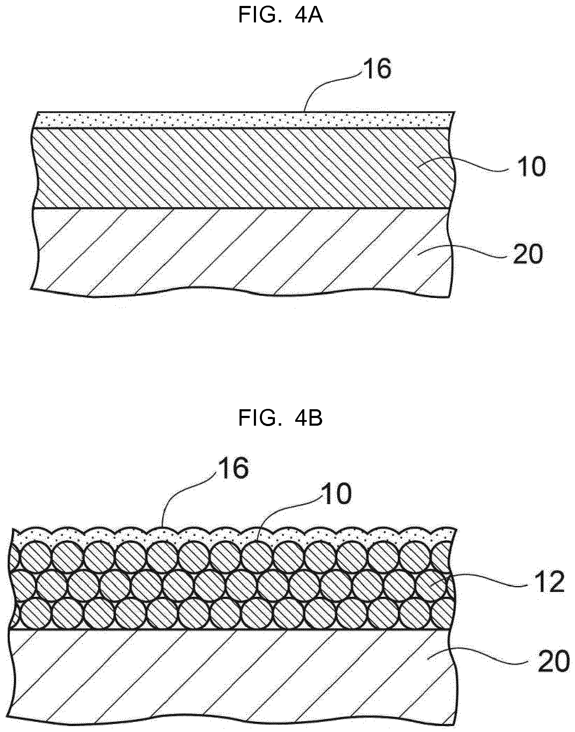

Each of Figs. 4A and 4B is an enlarged cross sectional view schematically illustrating a part of the negative electrode active material shown in Figs 1 to 3. Fig. 4A illustrates an embodiment of a state of the carbon 10 in the negative electrode active material, and Fig. 4B illustrates another embodiment of the state of the carbon 10 in the negative electrode active material. The carbon 10 may be in a state in which it forms a continuous layer as shown in Fig. 4A, or may be in a state of carbon granules 12, which are granules formed of the carbon 10, as shown in Fig. 4B. In Fig. 4B, while the granules 12 formed of the carbon 10 are shown in the state in which the outlines thereof are remained, the granules 12 may be connected with one another. When the granules 12 are connected with one another, the carbon 10 may be in a state in which, as shown in Fig. 4A, it forms a continuous layer, which may include a void in a part thereof.

If necessary, the negative electrode active material of the present embodiment (SiO-based negative electrode active material) may be used in combination with a carbon-based negative electrode active material conventionally known as an active material for a negative electrode of a lithium ion secondary battery. An effect of improving the charge and discharge efficiency, an effect of improving the cycle characteristics, an effect of suppressing the cubical expansion of the electrode, and the like are obtained depending on a kind of a carbon-based negative electrode active material used in combination. The carbon-based negative electrode active material to be used in combination with the negative electrode active material of the present embodiment may be only one kind or two or more kinds thereof.

Examples of the carbon-based negative electrode active material include a negative electrode active material formed of a carbon material such as: natural graphite such as flake-shaped natural graphite or spherical natural graphite obtained by spheroidizing flake-shaped natural graphite; artificial graphite; or amorphous carbon. The carbon-based negative electrode active material may have carbon (the carbons described above) present on a part of the surface thereof or the entire surface thereof.

In a case in which the negative electrode active material of the present embodiment is used in combination with the carbon-based negative electrode active material, a ratio (A : B) of the negative electrode active material of the present embodiment (A) to the carbon-based negative electrode active material (B) can be appropriately adjusted in accordance with the purpose. For example, from the viewpoint of the effect of suppressing the cubical expansion of the electrode, the ratio is preferably from 0.1:99.9 to 20:80, more preferably from 0.5:99.5 to 15:85, and still more preferably from 1:99 to 10:90, based on the mass.

Negative Electrode for Lithium Ion Secondary Battery

A negative electrode for a lithium ion secondary battery (hereinafter, sometimes abbreviated to a "negative electrode ") of the present embodiment includes: a current collector; and a negative electrode material layer which is provided on the current collector and includes the above-described negative electrode active material.

The negative electrode may be produced, for example, by forming a negative electrode material layer over a current collector using a composition containing the negative electrode active material described above.

Examples of the composition containing the negative electrode active material include a composition including an organic binder, a solvent, a thickener, an electroconductive auxiliary material, a carbon-based negative electrode active material, and/or the like are mixed with the negative electrode active material.

Specific examples of the organic binder include styrene-butadiene copolymers; (meth)acrylic copolymers obtained by copolymerization of an ethylenic unsaturated carboxylic acid ester (such as methyl(meth)acrylate, ethyl(meth)acrylate, butyl(meth)acrylate, (meth)acrylonitrile, or hydroxyethyl(meth)acrylate) and an ethylenic unsaturated carboxylic acid (such as acrylic acid, methacrylic acid, itaconic acid, fumaric acid, or maleic acid); and polymer compounds such as polyvinylidene fluoride, polyethylene oxide, polyepichlorohydrin, polyphosphazene, polyacrylonitrile, polyimide, or polyamide imide. Here, the term "(meth)acrylate" means "acrylate" and "(meth)acrylate" corresponding thereto. The same applies to "(meth)acrylic copolymer" and other similar expressions. The organic binder may be one dispersed or dissolved in water, or one dissolved in an organic solvent such as N-methyl-2-pyrrolidone (NMP). Only one kind of the organic binder may be used, or alternatively, a combination of two or more kinds of the organic binder may be used.

In view of adhesiveness, among the organic binders, an organic binder having polyacrylonitrile, polyimide, or polyamide imide as a main skeleton thereof is preferable, and from the viewpoints of a low heat treatment temperature during the production of a negative electrode and excellent electrode flexibility, an organic binder having polyacrylonitrile as a main skeleton thereof is more preferable. Examples of the organic binder having polyacrylonitrile as a main skeleton thereof include one in that an acrylic acid for imparting adhesiveness and a straight chain ether group for imparting flexibility are added to a polyacrylonitrile skeleton.

A content of the organic binder in a negative electrode material layer is preferably from 0.1% by mass to 20% by mass, more preferably from 0.2% by mass to 20% by mass, and still more preferably from 0.3% by mass to 15% by mass. In a case in which the content of the organic binder in a negative electrode material layer is 0.1% by mass or more, excellent adhesiveness can achieved, and destruction of a negative electrode by cubical expansion and constriction in charging and discharging can be suppressed. Meanwhile, in a case in which the content is 20% by mass or less, increase of electrode resistance can be suppressed.

Specific examples of the thickener include carboxymethyl cellulose, methylcellulose, hydroxymethyl cellulose, ethyl cellulose, polyvinyl alcohol, polyacrylic acid (polyacrylate), oxidized starch, phosphorylated starch, casein and the like. Only one kind of the thickener may be used, or alternatively, a combination of two or more kinds of the thickener may be used.

Specific examples of the solvent include N-methylpyrrolidone, dimethylacetamide, dimethylformamide, $\gamma$-butyrolactone and the like. Only one kind of the solvent may be used, or alternatively, a combination of two or more kinds of the solvent may be used.

Specific examples of the electroconductive auxiliary material include carbon black, acetylene black, an oxide having electrical conductivity, a nitride having electrical conductivity and the like. Only one kind of the electroconductive auxiliary material may be used, or alternatively, a combination of two or more kinds of the electroconductive auxiliary material may be used. A content of the electroconductive auxiliary material is preferably from 0.1% by mass to 20% by mass with respect to the negative electrode material layer.

Examples of a material of the current collector include aluminum, copper, nickel, titanium, stainless steel, a porous metal (a foamed metal), and a carbon paper. Examples of a shape of the current collector include a foil form, a perforated foil form, and a mesh form.

Examples of a method of forming the negative electrode material layer on the current collector using the composition containing the negative electrode active material include: a method including applying a coating liquid including the negative electrode active material to the current collector, removing therefrom volatile substances such as a solvent, and subjecting the resultant to press-forming; and a method including integrating the negative electrode material layer which is made in a sheet-like shape, pellet-like shape or the like and the current collector; and the like.

Examples of the method of applying the coating liquid to the current collector include a metal mask printing method, an electrostatic coating method, a dip coating method, a spray coating method, a roll coating method, a doctor blade method, a gravure coating method, and a screen printing method. A pressure treatment after the application may be performed by a flat-plate plate press, a calender roll, or the like.

Integration of the negative electrode material layer and the current collector may be carried out by rolling, pressing, or a combination thereof.

The negative electrode material layer formed on the current collector or the negative electrode layer integrated with the current collector may be subjected to a heat treatment which depends on the organic binder used. For example, in a case in which an organic binder having a polyacrylonitrile as its main skeleton is used, the heat treatment is preferably carried out at a temperature of from 100°C to 180°C, and in a case in which an organic binder having a polyimide or polyamide-imide as its main skeleton is used, the heat treatment is preferably carried out at a temperature of from 150°C to 450°C.

By the heat treatment, the solvent is removed, the strength is highly intensified through the curing of the organic binder, and the adhesiveness between the negative electrode active materials and the adhesiveness between the negative electrode active material and the current collector can be improved. These heat treatments are preferably carried out in an inert atmosphere, such as helium, argon, or nitrogen, or in a vacuum atmosphere, in order to prevent oxidization of the current collector during the treatment.

The negative electrode layer may preferably be pressed (pressure treatment) before the heat treatment. By the pressure treatment, its electrode density can be controlled. The electrode density is preferably from 1.4 g/cm$^3$ to 1.9 g/cm$^3$, more preferably from 1.5 g/cm$^3$ to 1.85 g/cm$^3$, and still more preferably from 1.6 g/cm$^3$ to 1.8 g/cm$^3$. The higher the electrode density is, the more the volumetric capacity of the negative electrode tends to be improved and further the adhesiveness between negative electrode active materials and the adhesiveness between the negative electrode active material and the current collector tends to be improved.

Lithium Ion Secondary Battery

A lithium ion secondary battery according to the present embodiment includes: a positive electrode; the negative electrode described above; and an electrolyte.

The lithium ion secondary battery may be prepared by, for example, oppositely disposing in a cell casing the negative electrode and the positive electrode with a separator therebetween, and injecting therein an electrolytic solution obtained by dissolving an electrolyte to an organic solvent.

The positive electrode may be obtained similarly as the negative electrode, by forming a positive electrode material layer on the surface of a current collector. As a current collector for the positive electrode, a current collector similar to one usable for the negative electrode may be used.

A material to be used for the positive electrode (also referred to as a "positive electrode material") may be any compound as long as it enables doping or intercalation of a lithium ion, and examples thereof include lithium cobaltate (LiCoO$_2$), lithium nickelate (LiNiO$_2$), and lithium manganate (LiMnO$_2$).

The positive electrode may be produced by, for example, preparing a positive electrode coating liquid by mixing the positive electrode material, an organic binder such as polyvinylidene fluoride, and a medium such as N-methyl-2-pyrrolidone or $\gamma$-butyrolactone, applying the positive electrode coating liquid to at least one surface of a current collector such as aluminum foil, and removing the medium by drying, followed by, if necessary, a pressure treatment.

An electroconductive auxiliary material may be added to the positive electrode coating liquid. Examples of the electroconductive auxiliary material include carbon black, acetylene black, an oxide having electrical conductivity or a nitride having electrical conductivity. Only one kind of the electroconductive auxiliary material may be used, or alternatively, a combination of two or more kinds of the electroconductive auxiliary material may be used.

Examples of the electrolyte include LiPF$_6$, LiClO$_4$, LiBF$_4$, LiClF$_4$, LiAsF$_6$, LiSbF$_6$, LiAlO$_4$, LiAlCl$_4$, LiN(CF$_3$SO$_2$)$_2$, LiN(C$_2$F$_5$SO$_2$)$_2$, LiC(CF$_3$SO$_2$)$_3$, LiCl, and LiI.

Examples of the organic solvent which dissolves the electrolyte include propylene carbonate, ethylene carbonate, diethyl carbonate, ethyl methyl carbonate, vinyl carbonate, $\gamma$-butyrolactone, 1,2-dimethoxyethane, and 2-methyltetrahydrofuran.

Examples of the separator include a paper separator, a polypropylene separator, a polystyrene separator, and a glass fiber separator.

A production method of the lithium ion secondary battery is not particularly limited. For example, a cylindrical lithium ion secondary battery may be produced by the processes below. First, two electrodes of the positive electrode and the second electrode are wound together with the separator placed therebetween. The obtained wound group in a spiral shape is inserted in a cell casing, and a tab terminal, which has been welded to a current collector of the negative electrode in advance, is welded to the bottom of the cell casing. An electrolytic solution is introduced into the obtained cell casing, and a tab terminal, which has been welded to a current collector of the positive electrode in advance, is welded to the lid of the cell casing. The lid is arranged on the top of the cell casing with an insulating gasket disposed therebetween, and the portion at which the lid contacts with the cell casing are swaged so as to seal them, thereby obtaining a lithium ion secondary battery.

The shape of the lithium ion secondary battery is not particularly limited, and examples thereof include a paper battery, a button lithium ion secondary battery, a coin lithium ion secondary battery, a layered lithium ion secondary battery, a cylindrical lithium ion secondary battery, and a rectangular lithium ion secondary battery.

The negative electrode active material according to the present embodiment is not limited to an application for a lithium ion secondary battery, and it may be applied generally to an electrochemical apparatus employing lithium-ion intercalation/deintercalation as a charge and discharge mechanism.

EXAMPLES

Hereinafter, the embodiments are described more specifically with reference to Examples, but the embodiments are not limited to the examples. Here, "%" is based on mass unless otherwise specified.

Example 1

Preparation of Negative electrode active material

Oxidized silicon having a bulk-shape (Kojundo Chemical Lab. Co., Ltd, standard 10 mm to 30 mm square) was coarsely ground in a mortar, thereby obtaining silicon oxide particles. The silicon oxide particles were further pulverized with a jet mill (LABO TYPE, manufactured by Nippon Pneumatic Mfg. Co., Ltd.), and then the particle diameter thereof was regulated using a 300-M (300-mesh) test screen, thereby obtaining silicon oxide particles having a volume mean particle diameter (D50%) of 5 $\mu$m. The mean particle diameter was measured by a method shown below.

Measurement of Mean Particle Diameter

The measurement sample (5 mg) was added to a 0.01% by mass aqueous solution of surfactant (ETHOMEEN T/15, Lion Corporation), and the mixture was dispersed using a vibrational stirrer. The obtained dispersion was placed in a sample vessel of a laser diffraction particle size distribution measurement apparatus (SALD 3000J, Shimadzu Corporation), and measurement was carried out with a laser diffractometry method while circulating using a pump under an ultrasonic treatment. The measurement conditions are shown below. A particle diameter at which a cumulative volume reached 50% (D50%) in the obtained particle size distribution was defined as a mean particle diameter. In the following Examples, the measurements of the mean particle diameters were performed in a similar manner.
Light source: red-color semiconductor laser (690 nm)
Absorbance: 0.10 to 0.15
Refractive index: 2.00 to 0.20
1000 g of the obtained silicon oxide particles and 100 g of coal pitch (fixed carbon content: 50% by mass) as a carbon source were charged in a mixing apparatus (rocking mixer RM-10G, Aichi Electric Co. Ltd., mixed for 5 minutes, and then charged in an alumina container for a heat treatment. After the completion of the charging in the container for a heat treatment, the resultant was subjected to a heat treatment using an atmosphere furnace in a nitrogen atmosphere at 950°C for 5 hours, thereby carbonized the carbon source to obtain a heat-treated product. The heat treatment was performed under a condition at which a disproportionation reaction of silicon oxide occurs.
The obtained heat-treated product was ground in a mortar, and further subjected to sieving with a 300-M (300-mesh) test screen, thereby obtaining a negative electrode active material (SiO-C particle), in which carbon covers surfaces of the silicon oxide particles. A volume mean particle diameter (D50%) of the negative electrode active material was measured in a similar manner to that for the silicon oxide particles. Further, D10% and D90% were measured, and an SD value and a value of D10%/D90% were calculated therefrom.

Measurement of Carbon Content

A content of carbon in the negative electrode active material was measured by a high-frequency furnace combustion-infrared absorption spectrometry. The high-frequency furnace combustion-infrared absorption spectrometry is an analysis method in which a sample is heated and combusted in a high-frequency furnace under oxygen stream to convert carbon and sulfur in the sample into $CO_2$ and $SO_2$, respectively, and the products are quantified with an infrared absorption method. The measurement apparatus, the measurement condition, and the like are as follows.
Apparatus: sulfur/carbon simultaneous analyzer (CSLS600, LECO Japan Corporation)
Frequency: 18 MHz
High-frequency output: 1600 W
Sample mass: approximately 0.05 g
Analysis time: use in auto mode of the set mode of the apparatus
Combustion improver: Fe + W/Sn
Standard sample: LECO 501-024 (C: 3.03% $\pm$ 0.04, S: 0.055% $\pm$ 0.002) 97
Number of measurement: two times (the value of the content ratio shown in Table is a mean value of two measurements)

Measurement of Size of Silicon Crystallite

A size of a silicon crystallite was measured by measuring an intensity of an X-ray diffraction peak of the negative electrode active material using a powder X-ray diffractometer (MULTIFLEX (2 kW), Rigaku Corporation). Specifically, it was determined by a Scherrer equation based on a half-value width of a peak at $2\theta$ = about 28.4°derived from a crystal face of Si (111). The measurement condition is as follows.

Radiation source: CuKa radiation (wavelength: 0.154056 nm)
Measurement range: $2\theta$ = 10° to 40°
Step width of sampling: 0.02°
Scan speed: 1°/min
Tube current: 40 mA
Tube voltage: 40 kV
Divergence slit: 1°
Scatter slit: 1°
Light receiving slit: 0.3 mm

The obtained profile was subject to removal of the background (BG) and separation of the peak using a structure analyzing software (JADE 6, Rigaku Corporation.) supplied with the above apparatus in accordance with the following settings.

Removal of K$\alpha$2 Peak and Removal of Background

K$\alpha$1/K$\alpha$2 intensity ratio: 2.0
Deviation ($\sigma$) of BG curve from BG point: 0.0

Designation of Peak

Peak derived from Si (111): 28.4° $\pm$ 0.3°
Peak derived from $SiO_2$: 21° $\pm$ 0.3°

Separation of Peak

Profile shape function: Pseudo-Voigt
Fixed background

The half-value width of the peak derived from Si (111) calculated by the structure analyzing software in accordance with the above settings was read, and the size of the silicon crystallite was calculated by the following Scherrer equation.

$$D = K\lambda/B\cos\theta$$

$$B = (B_{obs}^2 - b^2)^{1/2}$$

D: size (nm) of crystallite
K: Scherrer constant (0.94)
$\lambda$: wavelength of irradiation source (0.15406 nm)
$\theta$: peak angle of measured half-value width
$B_{obs}$: half-value width (the measured value obtained using the structure analyzing software)
b: measured half-value width of standard silicon (Si)

Measurement of X-ray Diffraction Peak Intensity Ratio ($P_{Si}/P_{SiO2}$)

The negative electrode active material was analyzed using a powder X-ray diffractometer (MultiFlex (2kW), Rigaku Corporation) in a similar manner to that described above. A ratio ($P_{Si}/P_{SiO2}$) of an intensity of an X-ray diffraction peak at $2\theta$ of from 27° to 29° derived from Si to an intensity of an X-ray diffraction peak at $2\theta$ of from 20° to 25° derived from $SiO_2$ was calculated with respect to the negative electrode active material.

Measurement of Mean Aspect Ratio

A mean aspect ratio of each negative electrode active material was calculated by the method described above using a SEM device (TM-1000, Hitachi High Technologies, Ltd.).

For the negative electrode active material containing the conductive particle described below, only SiO-C particles were selected by EDX-based elemental analysis in advance, and the mean aspect ratio was calculated.

Measurement of R Value

An R Value was calculated from a spectrum measured by using a Raman spectrum measurement apparatus (type NSR-1000, JASCO Corporation). The measurement conditions are as follows.
Laser wavelength: 532 nm
Irradiation intensity: 1.5 mW (the value measured with a laser power monitor)
Irradiation time: 60 seconds
Irradiation area: 4 $\mu$m$^2$
Measurement range: 830 cm$^{-1}$ to 1940 cm$^{-1}$
Base line: 1050 cm$^{-1}$ to 1750 cm$^{-1}$

A wavenumber of the obtained spectrum was corrected based on a calibration curve determined by a difference between the wavenumber of the respective peaks obtained by measuring a standard substance indene (Wako first grade, Wako Pure Chemical Industries) under the same condition as above and the theoretical value of the wavenumber of the respective peaks of indene.

A peak strength occurred at near 1360 cm$^{-1}$ in the profile obtained after the correction was defined as $I_d$, and a peak strength occurred at near 1580 cm$^{-1}$ in the profile obtained after the correction was defined as $I_g$. A ratio of the both peak intensities $I_d/I_g$ (D/G) was determined as the R value.

Measurement of BET Specific Surface Area

Nitrogen adsorption at the liquid nitrogen temperature (77 K) was measured with a 5 point method using a high-speed specific surface area/micropore distribution measurement apparatus (ASAP 2020, Micromeritics Japan G. K.), to calculate a specific surface area of the negative electrode active material according to a BET method (relative pressure range: from 0.05 to 0.2).

Measurement of Powder Electric Resistance

A powder electric resistance of the obtained negative electrode active material (3.0g) was measured in an atmosphere of a pressure of 10MPa at a temperature of 25° C using a powder electric resistance measuring device (type MSP-PD51, 4 probes, Mitsubishi Chemical Analytech Co., Ltd.). The tolerable measuring range of the powder electric resistivity measuring device used is from 10$^{-3}$ $\Omega$ to 10$^7$ $\Omega$.

Production of Negative Electrode

4.9% by mass of the powder of the negative electrode active material prepared by the above method, 92.7% by mass of an artificial graphite (manufactured by Hitachi Chemical Company, Ltd.) as the carbon-based negative electrode active material, 1.2% by mass of carboxymethy cellulose (CMC) and 1.2% by mass of styrene-butadiene rubber (SBR) were mixed and kneaded to prepare a composition for forming a negative electrode. The composition for forming a negative electrode was applied to a glossy surface of an electrolytic copper foil such that the application amount is 10 mg/cm$^2$, subjected to a predrying treatment at 90°C for 2 hours, and then a density of the resultant was adjusted to 1.65 g/cm$^3$ by roll pressing. Subsequently, the resultant was dried at 120°C for 4 hours in a vacuum atmosphere, thereby obtaining a negative electrode.

Production of Lithium Ion Secondary Battery

A 2016-type coin cell was produced using the above-obtained negative electrode, a metal lithium as a counter electrode, a mixed liquid of 1M LiPF$_6$ containing ethyl carbonate (EC), diethyl carbonate (DEC) and ethyl methyl carbonate (EMC) (volume ratio = 1:1:1) and vinylene carbonate (VC) (1.0% by mass) as an electrolytic solution, a polyethylene microporous film having a thickness of 25 $\mu$m as a separator, and a copper plate having a thickness of 250 $\mu$m as a spacer.

Cell Performance (Initial Discharge Capacity, Initial Charge and Discharge Efficiency)

The above-obtained cell was placed in a thermostat kept at 25°C, and an initial charge capacity was measured by carrying out charging at a constant current of 0.45 mA/cm$^2$ up to 0 V and then further charging at a constant voltage of 0 V until the current reached a value corresponding to 0.09 mA/cm$^2$. After the charging, 30-minute pause was taken and then discharging was carried out. The discharging was carried out at a current of 0.45 mA/cm$^2$ until the voltage value reached 1.5 V, and then an initial discharge capacity was measured. Here, the capacity was converted to a value per the mass of the negative electrode active material used. Calculation was performed by dividing the initial discharge capacity by the initial charge capacity to obtain a value and then multiplying the obtained value by 100, to obtain another value, which is defined as an initial charge and discharge efficiency (%). The result is shown in Table 1.

Cycle characteristics

The above-obtained cell was placed in a thermostat kept at 25°C, charged at a constant current of 0.45 mA/cm$^2$ up to 0 V and then further charged at a constant voltage of 0 V until the current reached a value corresponding to 0.09 mA/cm$^2$. After the charging, 30-minute pause was taken and then discharging was carried out. The discharging was carried out at a current of 0.45 mA/cm$^2$ until the voltage value reached 1.5 V. The charge and discharge was defined as one cycle. A cycle test which includes performing the one cycle 10 times was conducted, and a cycle characteristic calculated by the following equation was evaluated. The result is shown in Table 1.

$$\text{Equation: Cycle characteristics (10-cycle capacity retention rate)} = [\text{discharge capacity at 10th cycle/discharge capacity at 1st cycle}] \times 100(\%)$$

Storage characteristics (Life: Retention Rate and Recovery Rate)

The above-obtained cell was placed in a thermostat kept at 25°C, charged at a constant current of 0.45 mA/cm$^2$ up to 0 V and then further charged at a constant voltage of 0 V until the current reached a value corresponding to 0.09 mA/cm$^2$. After the charging, 30-minute pause was taken and then discharging was carried out. The discharging was carried out at a current of 0.45 mA/cm$^2$ until the voltage value reached 1.5 V.
After the charging of second cycle was performed under the same conditions as described above, the cell was placed in a thermostat kept at 70°C in a charged state and stored for 72 hours. Thereafter, the cell was again placed in a thermostat kept at 25° C, and discharging was carried out at a current of 0.45mA/cm$^2$ until the voltage value reached 1.5V. A ratio of a discharge capacity immediately after storage at 70° C to an initial discharge capacity ((discharge capacity immediately after storage at 70° C/initial discharge capacity) $\times$ 100(%)) was defined as a retention rate of a storage characteristics. The result is shown in Table 1.
Then, using a thermostat kept at 25° C, the charge/discharge test was performed in third cycle under the same conditions as described above. A ratio of a discharge capacity in the third cycle to the initial discharge capacity ((discharge capacity in the third cycle/initial discharge capacity) $\times$ 100(%)) was defined as a recovery rate of the storage characteristics. The results are given in Table 1.

Examples 2 to 4

Negative electrode active materials were produced and evaluated in the same manner as in Example 1, except that the temperature of heat treatment at which the carbonization of the carbon source and the disproportionation reaction of the silicon oxide were made to occur was changed to 1000° C (Example 2), 1050° C (Example 3) and 1100° C (Example 4), respectively. The results are shown in Table 1.

Comparative examples 1 and 2

Negative electrode active materials were produced and evaluated in the same manner as in Example 1, except that the temperature of heat treatment at which the carbonization of the carbon source and the disproportionation reaction of the silicon oxide were made to occur was changed to 900° C (Comparative example 1) and 1150° C (Comparative example 2), respectively. The results are shown in Table 1.

Example 5

A negative electrode active material was produced and evaluated in the same manner as in Example 3, except that the silicon oxide particles having a volume mean particle diameter (D50%) of 5μm obtained after the step of pulverizing the silicon oxide particle were further subject to an additional treatment of surface modification by NOBILTA (NOB-VC, Hosokawa Micron Co., Ltd.). The results are shown in Table 1.

Example 6

A negative electrode active material was produced and evaluated in the same manner as in Example 3, except that the silicon oxide particles having a volume mean particle diameter (D50%) of 5μm obtained after the step of pulverizing the silicon oxide particles were further subject to an additional treatment of surface modification by MECHANOFUSION system (Lab, Hosokawa Micron Co., Ltd.). The results are shown in Table 1.

Example 7

A negative electrode active material was produced and evaluated in the same manner as in Example 3, except that a fine impact mill: pin mill type (UPZ, Hosokawa Micron Co., Ltd.) was used as a pulverizing apparatus in the step of pulverizing the silicon oxide particles, and the silicon oxide particles were pulverized so that a volume mean particle diameter (D50%) became 5μm. The results are shown in Table 1.

Example 8

A negative electrode active material was produced and evaluated in the same manner as in Example 3, except that a fine mill (SF type, Nippon Coke & Engineering Co., Ltd.) was used as a pulverizing apparatus in the step of pulverizing the silicon oxide particles, and the silicon oxide particles were pulverized so that a volume mean particle diameter (D50%) became 5μm. The results are shown in Table 1.

Example 9

A negative electrode active material was produced and evaluated in the same manner as in Example 3, except that an amount of the coal pitch used as a carbon source was changed to 200g. The results are shown in Table 1.

Example 10

A negative electrode active material was produced and evaluated in the same manner as in Example 3, except that the silicon oxide particles were pulverized in the step of pulverizing the silicon oxide particles so that a volume mean particle diameter (D50%) became 10μm. The results are shown in Table 1.

Example 11

A negative electrode active material was produced and evaluated in the same manner as in Example 7, except that the silicon oxide particles were pulverized in the step of pulverizing the silicon oxide particles so that a volume mean particle diameter (D50%) became 10μm. The results are shown in Table 1.

Comparative example 3

A negative electrode active material was produced and evaluated in the same manner as in Example 3, except that a small size vibration mill (type NB-0, Nitto Kagaku Co., Ltd.) was used as a pulverizing apparatus in the step of pulverizing the silicon oxide particles, and the silicon oxide particles were pulverized so that a volume mean particle diameter (D50%) became 5μm. The results are shown in Table 1.

Comparative example 4

A negative electrode active material was produced and evaluated in the same manner as in Example 3, except that a tumbling ball mill (media: alumina ball, treatment condition: 60 rotation per minute (rpm) for 10 hours) was used as a pulverizing apparatus in the step of pulverizing the silicon oxide particles, and the silicon oxide particles were pulverized so that a volume mean particle diameter (D50%) became 5μm. The results are shown in Table 1.

[0165] Table 1

| Item s | Ex. 1 | Ex. 2 | Ex. 3 | Ex. 4 | Ex. 5 | Ex. 6 | Ex. 7 | Ex. 8 |
|---|---|---|---|---|---|---|---|---|
| Heat treatm ent Tem p. [°C] | 950 | 1000 | 1050 | 1100 | 1050 | 1050 | 1050 | 1050 |
| XRD intensity ratio $P_{Si}$ / $P_{SiO2}$ [-] | 1.3 | 1.6 | 1.9 | 2.5 | 1.9 | 1.9 | 1.8 | 1.9 |
| Carbon content [m ass%] | 5.1 | 5.0 | 4.9 | 5.0 | 4.9 | 5.0 | 5.0 | 4.9 |
| Size of silicon crystallite [nm ] | 3.0 | 4.0 | 5.8 | 7.7 | 5.7 | 5.9 | 5.8 | 5.7 |
| R va lue (D /G ) | 1.0 | 0.9 | 1.0 | 0.9 | 1.0 | 1.0 | 1.0 | 0.9 |
| BET spec ific surface area [m $^2$/g] | 3.4 | 2.4 | 2.2 | 2.1 | 2.2 | 2.2 | 2.4 | 2.3 |
| M ean particle d iam eter [μm ] | 5.7 | 5.6 | 5.7 | 5.6 | 5.5 | 5.5 | 5.6 | 5.6 |
| D 10% d iam eter [μm ] | 3.76 | 3.80 | 3.79 | 3.75 | 3.98 | 4.05 | 1.47 | 1.34 |
| D 90% d iam eter [μm ] | 8.44 | 8.48 | 8.43 | 8.37 | 7.84 | 7.47 | 11.45 | 11.48 |
| SD va lue [μm ] | 2.34 | 2.34 | 2.32 | 2.31 | 1.93 | 1.71 | 4.99 | 5.07 |
| D 10% /D 90% [-] | 0.445 | 0.448 | 0.450 | 0.448 | 0.508 | 0.542 | 0.128 | 0.117 |
| M ean aspect ratio [-] | 0.72 | 0.75 | 0.73 | 0.71 | 0.85 | 0.90 | 0.69 | 0.58 |
| Pow der e lectric resistance [Ω ·cm ] | 69 | 67 | 67 | 68 | 66 | 66 | 67 | 68 |
| In itia l discharge capacity [m Ah/g] | 401 | 403 | 404 | 405 | 405 | 406 | 402 | 401 |
| In itia l charge/d ischarge efficiency [% ] | 89.9 | 90.7 | 90.8 | 91.0 | 90.9 | 91.0 | 90.7 | 90.6 |
| Sto rage characteristics: R etention rate [% ] | 94.6 | 95.1 | 95.0 | 94.7 | 95.2 | 95.4 | 95.0 | 94.9 |
| Sto rage characteristics: R ecovery rate [% ] | 96.1 | 96.4 | 96.6 | 96.3 | 96.7 | 96.8 | 96.4 | 96.3 |
| 10-cyc le capac ity retention rate [% ] | 92.5 | 94.2 | 94.1 | 94.0 | 94.3 | 94.5 | 94.0 | 93.9 |

Table 1 -cont.

| Item s | Ex. 9 | Ex. 10 | Ex. 11 | Com Ex. 1 | Com Ex. 2 | Com Ex. 3 | Com Ex. 4 |
|---|---|---|---|---|---|---|---|
| Heat treatm ent Tem p. [°C] | 1050 | 1050 | 1050 | 900 | 1150 | 1050 | 1050 |
| XRD intensity ratio $P_{Si}$ / $P_{SiO2}$ [-] | 1.8 | 1.9 | 1.9 | 0.9 | 2.7 | 1.9 | 1.8 |
| Carbon content [m ass%] | 9.8 | 4.8 | 4.9 | 5.1 | 4.9 | 5.0 | 5.0 |
| Size of silicon crystallite [nm ] | 5.8 | 5.7 | 5.8 | 1.8 | 10.8 | 5.8 | 5.7 |
| R va lue (D /G ) | 0.9 | 1.0 | 0.9 | 1.0 | 1.0 | 1.0 | 1.0 |
| BET spec ific surface area [m $^2$/g] | 4.1 | 1.9 | 1.7 | 4.1 | 1.9 | 2.3 | 2.4 |
| M ean particle d iam eter [μm ] | 6.8 | 10.3 | 10.2 | 5.6 | 5.7 | 5.6 | 5.7 |
| D 10% d iam eter [μm ] | 3.81 | 5.17 | 4.03 | 3.81 | 3.84 | 1.28 | 1.13 |
| D 90% d iam eter [μm ] | 8.45 | 13.95 | 15.37 | 8.45 | 8.50 | 13.24 | 14.77 |
| SD va lue [μm ] | 2.32 | 4.39 | 5.67 | 2.32 | 2.33 | 5.98 | 6.82 |
| D 10% /D 90% [-] | 0.451 | 0.371 | 0.262 | 0.451 | 0.452 | 0.097 | 0.077 |
| M ean aspect ratio [-] | 0.76 | 0.71 | 0.51 | 0.72 | 0.73 | 0.43 | 0.34 |
| Pow der e lectric resistance [Ω ·cm ] | 64 | 68 | 69 | 78 | 68 | 73 | 73 |
| In itia l discharge capacity [m Ah/g] | 402 | 402 | 401 | 400 | 381 | 400 | 400 |
| In itia l charge/d ischarge efficiency [% ] | 90.5 | 90.3 | 90.2 | 89.6 | 92.3 | 90.5 | 90.1 |
| Sto rage characteristics: R etention rate [% ] | 94.8 | 94.7 | 94.3 | 93.9 | 95.3 | 94.8 | 93.9 |
| Sto rage characteristics: R ecovery rate [% ] | 96.6 | 96.1 | 95.8 | 95.1 | 96.8 | 96.2 | 95.7 |
| 10-cyc le capac ity retention rate [% ] | 94.3 | 93.6 | 92.7 | 91.2 | 94.3 | 93.8 | 92.9 |

As shown in Table 1, the lithium-ion secondary batteries of Examples 1 to 11, each of which using the negative electrode active material having the X-ray diffractive peak intensity ratio ($P_{Si}$/$P_{SiO2}$), the mean aspect ratio, the SD value, and the D10%/D90% value satisfying the specified conditions, exhibited high initial discharge capacities and initial charge/discharge efficiencies, and were excellent in cycling characteristics and life.

The negative electrode active materials of Comparative examples 1 and 2, each of which failed to satisfy the specified condition of the X-ray diffractive peak intensity ratio ($P_{Si}$/$P_{SiO2}$), were inferior to Examples in terms of the initial discharge capacity.

The negative electrode active materials of Comparative examples 3 and 4, each of which failed to satisfy any of the specified conditions of the mean aspect ratio, the SD value, and the D10%/D90% value, were inferior to Examples in terms of any of the initial discharge capacity, the initial charge/discharge efficiency, the cycle characteristics, and the life.

Subsequently, a negative electrode active material containing an organic substance present on a part of a surface of or an entire surface of the SiO-C particle was produced and evaluated.

Example 12

After dissolving 1.0 g of carboxymethyl cellulose sodium salt as an organic substance in 1L of pure water, 200 g of the SiO-C particle produced in Example 3 were put therein, and dispersing was performed by agitation using a homogenizer for 10 minutes. Thereafter, the resultant was dried for 12 hours in a thermostat set at 150°C to remove water therefrom. As a result, a SiO-C particle having an organic substance attached to a surface thereof was obtained. Then, the particle was subject to crushing in a mortar and sieved through a 300M (300 mesh) test sieve to prepare an intended negative electrode active material. The negative electrode active material was evaluated in the same manner as in Example 3. The results are shown in Table 2.

Measurement of Content of Organic substance

The obtained negative electrode active material was heated in an electric furnace under the air at 300°C for 2 hours to decompose the organic substance, and a content of the organic substance was calculated from a change in mass before and after the heating. In the case of Example 12, the mass before the heating (A) was 1.0000 g, the mass after the heating (B) was 0.9956 g, and accordingly its content of organic substance was 0.44% by mass.

Example 13

A negative electrode active material was produced and evaluated the same manner as in Example 12, except that the organic substance was changed to sodium alginate ester (1.0 g). The results are shown in Table 2.

Example 14

A negative electrode active material was produced and evaluated the same manner as in Example 12, except that the organic substance was changed to propylene glycol alginate (1.0 g). The results are shown in Table 2.

Example 15

A negative electrode active material was produced and evaluated the same manner as in Example 12, except that the organic substance was changed to pullulan (0.8 g) and trehalose (0.2 g). The results are shown in Table 2.

Example 16

A negative electrode active material was produced and evaluated the same manner as in Example 12, except that the organic substance was changed to polyvinyl alcohol (1.0 g). The results are shown in Table 2.

Example 17

A negative electrode active material was produced and evaluated the same manner as in Example 12, except that the organic substance was changed to sodium polyacrylate (1.0 g). The results are shown in Table 2.

Example 18

A negative electrode active material was produced and evaluated the same manner as in Example 12, except that the organic substance was changed to sodium polystyrene sulfonate (1.0 g). The results are shown in Table 2.

Example 19

A negative electrode active material was produced and evaluated the same manner as in Example 12, except that the organic substance was changed to polyaniline sulfonate (1.0 g). The results are shown in Table 2.

Examples 20 to 23

Negative electrode active materials were produced and evaluated in the same manner as in Example 12, except that the amounts of the organic substances added were changed to 0.3 g (Example 20), 2.0 g (Example 21), 6.0 g (Example 22), and 10 g (Example 23), respectively. The results are shown in Table 2.

Comparative Example 5

A negative electrode active material was produced and evaluated in the same manner as in Example 12, except that the negative electrode active material produced in Comparative example 1 (SiO-C particle) was used. The results are shown in Table 2.

As shown in Table 2, the lithium ion secondary batteries of Examples 12 to 23, each of which using the negative electrode active material in which an organic substance was attached to the negative electrode active material (SiO-C particle) of Example 3, had excellent storage characteristics (recovery rate) as compared to the lithium ion secondary battery of Example 3. This is considered to be because the BET specific surface area of the negative electrode active material became small due to the adhesion of the organic substance.

The lithium ion secondary battery of Comparative Example 5, which used the negative electrode active material in which an organic substance was attached to the negative electrode active material of Comparative Example 1, was observed to have the effect of improving the characteristics thanks to the attachment of the organic substance. However, as its peak intensity ratio failed to satisfy the specific condition, it was inferior to Examples in terms of the initial discharge capacity, the initial charge/discharge efficiency and the cycle characteristics.

[0180] Table 2

| Items | Ex. 12 | Ex. 13 | Ex. 14 | Ex. 15 | Ex. 16 | Ex. 17 | Ex. 18 |
|---|---|---|---|---|---|---|---|
| Heat treatment Temp. [°C] | 1050 | 1050 | 1050 | 1050 | 1050 | 1050 | 1050 |
| XRD intensity ratio $P_{Si}/P_{SiO2}$ [-] | 1.9 | 1.8 | 1.8 | 1.9 | 1.8 | 1.9 | 1.9 |
| Carbon content [mass%] | 4.8 | 4.9 | 4.9 | 4.8 | 4.9 | 5.0 | 4.9 |
| Size of silicon crystallite [nm] | 5.8 | 5.7 | 5.8 | 5.8 | 5.9 | 5.8 | 5.8 |
| R value (D/G) | 1.0 | 0.9 | 1.0 | 0.9 | 1.0 | 1.0 | 1.0 |
| Organic substance content | 0.44 | 0.46 | 0.45 | 0.43 | 0.42 | 0.45 | 0.42 |
| BET specific surface area [m²/g] | 2.0 | 1.8 | 1.9 | 1.9 | 1.8 | 1.9 | 1.9 |
| Mean particle diameter [μm] | 5.6 | 5.6 | 5.7 | 5.7 | 5.7 | 5.6 | 5.8 |
| D10% diameter [μm] | 3.67 | 3.64 | 3.71 | 3.83 | 3.89 | 3.77 | 3.57 |
| D90% diameter [μm] | 8.31 | 8.28 | 8.31 | 8.47 | 8.53 | 8.41 | 8.21 |
| SD value [μm] | 2.32 | 2.32 | 2.30 | 2.32 | 2.32 | 2.32 | 2.32 |
| D10%/D90% [-] | 0.442 | 0.440 | 0.446 | 0.452 | 0.456 | 0.448 | 0.435 |
| Mean aspect ratio [-] | 0.73 | 0.73 | 0.70 | 0.73 | 0.73 | 0.73 | 0.73 |
| Powder electric resistance [Ω·cm] | 67 | 67 | 67 | 67 | 66 | 67 | 67 |
| Initial discharge capacity [mAh/g] | 406 | 407 | 407 | 406 | 406 | 407 | 407 |
| Initial charge/discharge efficiency [%] | 91.1 | 91.2 | 91.2 | 91.0 | 91.1 | 91.2 | 91.2 |
| Storage characteristics: Retention rate [%] | 95.3 | 95.4 | 95.4 | 95.3 | 95.2 | 95.3 | 95.4 |
| Storage characteristics: Recovery rate [%] | 97.7 | 97.8 | 97.7 | 97.8 | 97.0 | 97.9 | 97.8 |
| 10-cycle capacity retention rate [%] | 94.4 | 94.5 | 94.5 | 94.2 | 94.3 | 94.5 | 94.4 |

Table 2 -cont.

| Items | Ex. 19 | Ex. 20 | Ex. 21 | Ex. 22 | Ex. 23 | Ex. 3 | Com Ex. 5 |
|---|---|---|---|---|---|---|---|
| Heat treatment Temp. [°C] | 1050 | 1050 | 1050 | 1050 | 1050 | 1050 | 900 |
| XRD intensity ratio $P_{Si}/P_{SiO2}$ [-] | 1.9 | 1.8 | 1.9 | 1.9 | 1.9 | 1.9 | 0.9 |
| Carbon content [mass%] | 4.7 | 4.9 | 5.1 | 5.0 | 4.9 | 4.9 | 5.1 |
| Size of silicon crystallite [nm] | 5.9 | 5.8 | 5.7 | 5.8 | 5.8 | 5.8 | 1.8 |
| R value (D/G) | 0.9 | 1.0 | 1.0 | 0.9 | 1.0 | 1.0 | 1.0 |
| Organic substance content | 0.43 | 0.11 | 0.93 | 2.94 | 4.92 | – | 0.44 |
| BET specific surface area [m²/g] | 2.0 | 2.1 | 1.8 | 1.7 | 1.5 | 2.2 | 3.9 |
| Mean particle diameter [μm] | 5.6 | 5.6 | 5.7 | 5.8 | 5.8 | 5.7 | 5.6 |
| D10% diameter [μm] | 3.90 | 3.68 | 3.99 | 3.65 | 3.68 | 3.79 | 3.85 |
| D90% diameter [μm] | 8.60 | 8.38 | 8.69 | 8.35 | 8.38 | 8.43 | 8.49 |
| SD value [μm] | 2.35 | 2.35 | 2.35 | 2.35 | 2.35 | 2.32 | 2.32 |
| D10%/D90% [-] | 0.453 | 0.439 | 0.459 | 0.437 | 0.439 | 0.450 | 0.453 |
| Mean aspect ratio [-] | 0.74 | 0.74 | 0.74 | 0.74 | 0.74 | 0.73 | 0.72 |
| Powder electric resistance [Ω·cm] | 67 | 67 | 69 | 75 | 84 | 67 | 78 |
| Initial discharge capacity [mAh/g] | 406 | 405 | 406 | 405 | 404 | 404 | 402 |
| Initial charge/discharge efficiency [%] | 91.1 | 91.0 | 91.1 | 91.0 | 90.9 | 90.8 | 89.9 |
| Storage characteristics: Retention rate [%] | 95.2 | 95.1 | 95.3 | 95.2 | 95.1 | 95.0 | 94.2 |
| Storage characteristics: Recovery rate [%] | 97.8 | 97.0 | 97.6 | 97.1 | 96.9 | 96.6 | 96.3 |
| 10-cycle capacity retention rate [%] | 94.3 | 94.1 | 94.3 | 94.2 | 94.3 | 94.1 | 91.5 |

Subsequently, a negative electrode active material having an organic substance adhered on a surface of a SiO-C particle on which a conductive particle has adhered was produced and evaluated.

Example 24

Attachment of Conductive Particle

Scaly graphite (KS-6, Timcal) having a volume mean particle diameter (D50%) of 3 micrometers and acetylene black (HS100, Denka Corporation) were prepared as conductive particles. 157 g of the scaky graphite, 39 g of acetylene black, and 4 g of carboxymethyl cellulose were added to 800g of water, and the resultant was dispersed and mixed in a bead mill to obtain a dispersion liquid of conductive particles (solid content: 20% by mass).

Then, 100 g of the dispersion liquid of the conductive particles obtained was put in 450 g of water, stirred well with a stirrer, and then 500 g of the SiO-C particle produced in Example 3 was added thereto, followed by further stirring, to obtain a dispersion liquid in which the SiO-C particle and the conductive particles were dispersed.

The obtained liquid in which the SiO-C particle and the conductive particles were dispersed was put in a dryer and dried at 150°C for 12 hours to remove water therefrom. As a result, the conductive particles adhered to the surface of the SiO-C particle. Thereafter, the resultant was crushed in a mortar and then sieved through a 300-mesh test sieve to obtain a CP/SiO-C particle.

Measurement of Content of Conductive Particles

A content of the conductive particles in the CP/SiO-C particle was measured by high-frequency furnace combustion-infrared absorption spectrometry. A value of the measured content encompassed a content of carbon. Therefore, the content of carbon was measured in advance by high-frequency furnace combustion-infrared absorption spectrometry, and the content of carbon was subtracted from the measured content. The measurement was performed in the same manner as the measurement method of the carbon content described above.

Attachment of Organic Substance

After dissolving 1.0 g of sodium alginate as an organic substance in 1L of pure water, 200 g of the CP/SiO-C particle was put therein, and dispersing was performed by agitation using a homogenizer for 10 minutes. Thereafter, the resultant was dried for 12 hours in a thermostat set at 150°C to remove water therefrom. As a result, a CP/SiO-C particle having an organic substance attached to a surface thereof was obtained. Then, the particle was subject to crushing in a mortar and sieved through a 300M (300 mesh) test sieve to prepare a negative electrode active material. The negative electrode active material was evaluated in the same manner as in Example 3. The results are shown in Table 3.

Example 25

A negative electrode active material was produced and evaluated in the same manner as in Example 24, except that the amount of the scaly graphite was changed to 137 g and the amount of the acetylene black was changed to 59 g. The results are shown in Table 3.

Example 26

A negative electrode active material was produced and evaluated in the same manner as in Example 24, except that the amount of the scaly graphite was changed to 117 g and the amount of the acetylene black was changed to 79 g. The results are shown in Table 3.

Example 27

A negative electrode active material was produced and evaluated in the same manner as in Example 24, except that only the acetylene black was used as the conductive particle. The results are shown in Table 3.

Examples 28 to 30

Negative electrode active materials were produced and evaluated in the same manner as in Example 24, except that the amounts of the dispersion liquid of the conductive particles mixed with 450g of water was changed to 20g (Example 28), 60g (Example 29), and 180g (Example 30), respectively. The results are shown in Table 3.

As shown in Table 3, the lithium-ion secondary batteries of Examples 24 to 30, each of which using the negative electrode active material in which the conductive particles were attached to the surface of the SiO-C particle, were superior in any of the initial discharge capacity, the initial charge/discharge efficiency, and the cycling characteristics as compared to Example 13, in which the conductive particles were not attached to the surface of the SiO-C particle. In addition, the lithium-ion secondary batteries of Examples 24 to 30 were superior in all properties as compared to Example 3, in which neither an organic substance nor conductive particles were attached.

Table 3

| Items | Ex. 24 | Ex. 25 | Ex. 26 | Ex. 27 | Ex. 28 | Ex. 29 | Ex. 30 | Ex. 3 | Ex. 13 |
|---|---|---|---|---|---|---|---|---|---|
| Heat treatment Temp. [°C] | 1050 | 1050 | 1050 | 1050 | 1050 | 1050 | 1050 | 1050 | 1050 |
| XRD intensity ratio $P_{Si}$ / $P_{SiO2}$ [-] | 1.9 | 1.9 | 2.0 | 1.9 | 2.0 | 1.9 | 2.0 | 1.9 | 1.8 |
| Carbon content [mass%] | 4.8 | 4.9 | 4.9 | 4.8 | 4.9 | 5.0 | 4.9 | 4.9 | 4.9 |
| Conductive particle content [mass%] | 4.9 | 4.9 | 4.9 | 4.8 | 0.9 | 2.9 | 8.9 | - | - |
| Size of silicon crystallite [nm] | 5.8 | 5.8 | 5.8 | 5.8 | 5.9 | 5.8 | 5.8 | 5.8 | 5.7 |
| R value (D/G) | 1.0 | 1.0 | 1.0 | 0.9 | 0.9 | 1.0 | 1.0 | 1.0 | 0.9 |
| Organic substance content | 0.47 | 0.46 | 0.46 | 0.47 | 0.46 | 0.47 | 0.46 | - | 0.46 |
| BET specific surface area [$m^2$/g] | 2.5 | 3.2 | 3.7 | 6.5 | 1.6 | 2.1 | 3.5 | 2.2 | 1.8 |
| Mean particle diameter [$\mu$m] | 5.6 | 5.6 | 5.7 | 5.7 | 5.7 | b.6 | 5.8 | 5.7 | 5.6 |
| D10% diameter [$\mu$m ] | 3.74 | 3.69 | 3.81 | 3.88 | 3.79 | 3.70 | 3.76 | 3.79 | 3.64 |
| D 90% diameter [$\mu$m] | 8.36 | 8.33 | 8.41 | 8.52 | 8.43 | 8.34 | 8.40 | 8.43 | 8.28 |
| SD value [$\mu$m] | 2.31 | 2.32 | 2.30 | 2.32 | 2.32 | 2.32 | 2.32 | 2.32 | 2.32 |
| D10% /D90% [-] | 0.447 | 0.443 | 0.453 | 0.455 | 0.450 | 0.444 | 0.448 | 0.450 | 0.440 |
| Mean aspect ratio [-] | 0.74 | 0.73 | 0.72 | 0.73 | 0.72 | 0.73 | 0.73 | 0.73 | 0.73 |
| Powder electric resistance [$\Omega\cdot$cm] | 35 | 41 | 52 | 56 | 56 | 43 | 30 | 67 | 67 |
| Initial discharge capacity [mAh/g] | 411 | 409 | 408 | 408 | 408 | 410 | 4Ub | 404 | 407 |
| Initial charge/discharge efficiency [%] | 91.4 | 91.3 | 91.3 | 91.2 | 91.3 | 91.4 | 91.0 | 90.8 | 91.2 |
| Storage characteristics: Retention rate [%] | 95.8 | 95.6 | 95.6 | 95.5 | 95.4 | 95.6 | 95.3 | 95.0 | 95.4 |
| Storage characteristics: Recovery rate [%] | 98.1 | 98.0 | 97.9 | 97.9 | 97.8 | 97.9 | 97.6 | 96.6 | 97.8 |
| 10-cycle capacity retention rate [%] | 95.0 | 94.9 | 94.8 | 94.7 | 94.6 | 95.1 | 94.6 | 94.1 | 94.5 |

The disclosure of International Patent Application No. PCT/JP2017/012745, filed on March 28, 2017, is incorporated herein by reference in its entirety.

All publications, patent applications, and technical standards mentioned in this specification are herein incorporated by reference to the same extent as if each individual publication, patent application, or technical standard was specifically and individually indicated to be incorporated by reference.

Explanation of reference numerals

    10: Carbon
    12: Carbon granule
    14: Conductive particle
    16: Organic substance
    20: Silicon oxide particle

**Claims**

1.    A negative electrode active material for a lithium ion secondary battery,

the negative electrode active material comprising silicon oxide particles each having carbon present on a part of a surface of or an entire surface thereof,

the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source, and

the negative electrode active material having a mean value of an aspect ratio (S/L) of its minor axis (S) to its major axis (L) of from 0.45 to 1.

2. A negative electrode active material for a lithium ion secondary battery,

the negative electrode active material comprising silicon oxide particles each having carbon present on a part of a surface of or an entire surface thereof,

the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source, and

the negative electrode active material having an SD value of 5.9 $\mu$m or smaller, the SD value being calculated according to the equation set forth below using D90%, which is a particle diameter corresponding to 90% cumulative from the smaller particle diameter side in a cumulative volume distribution curve obtained by a laser diffraction/scattering method, and D10%, which is a particle diameter corresponding to 10% cumulative from the smaller particle diameter side in the cumulative volume distribution curve:

$$SD\ value = (D90\% - D10\%) / 2.$$

3. A negative electrode active material for a lithium ion secondary battery,

the negative electrode active material comprising silicon oxide particles each having carbon present on a part of a surface of or an entire surface thereof,

the negative electrode active material having a ratio ($P_{Si}/P_{SiO2}$) of an intensity of an X-ray diffraction peak at $2\theta$ of from 27° to 29°, that is derived from Si, to an intensity of an X-ray diffraction peak at $2\theta$ of from 20° to 25°, that is derived from $SiO_2$, of from 1.0 to 2.6 when CuKa radiation with a wavelength of 0.154056 nm is employed as a radiation source, and

the negative electrode active material having a ratio (D10% / D90%) of 0.1 or greater, in which D90% is a particle diameter corresponding to 90% cumulative from the smaller particle diameter side in a cumulative volume distribution curve obtained by a laser diffraction/scattering method and D10% is a particle diameter corresponding to 10% cumulative from the smaller particle diameter side in the cumulative volume distribution curve.

4. The negative electrode active material for a lithium ion secondary battery according to any one of claims 1 to 3, further comprising an organic substance.

5. The negative electrode active material for a lithium ion secondary battery according to claim 4, wherein the organic substance comprises at least one selected from the group consisting of a starch derivative having $C_6H_{10}O_5$ as a unit structure thereof, a viscous polysaccharide having $C_6H_{10}O_5$ as a unit structure thereof, a water-soluble cellulose derivative having $C_6H_{10}O_5$ as a unit structure thereof, polyuronides, and a water-soluble synthetic resin.

6. The negative electrode active material for a lithium ion secondary battery according to claim 4 or 5, having a content of the organic substance of from 0.1 % by mass to 5.0 % by mass with respect to a total mass of the negative electrode active material for a lithium ion secondary battery.

7. The negative electrode active material for a lithium ion secondary battery according to any one of claims 1 to 6, further comprising a conductive particle.

8. The negative electrode active material for a lithium ion secondary battery according to claim 7, wherein the conductive particle comprises granular graphite.

9. The negative electrode active material for a lithium ion secondary battery according to claim 8, wherein the granular graphite is flat graphite.

**10.** The negative electrode active material for a lithium ion secondary battery according to any one of claims 7 to 9, having a content of the conductive particle of from 1.0 % by mass to 10.0 % by mass with respect to a total mass of the negative electrode active material for a lithium ion secondary battery.

**11.** The negative electrode active material for a lithium ion secondary battery according to any one of claims 1 to 10, having a content of the carbon of from 0.5 % by mass to 10.0 % by mass with respect to a total content of the silicon oxide particles and the carbon.

**12.** A negative electrode for a lithium ion secondary battery, the negative electrode comprising:

a current collector; and
a negative electrode material layer that is provided on the current collector and comprises the negative electrode active material for a lithium ion secondary battery according to any one of claims 1 to 11.

**13.** A lithium ion secondary battery, comprising:

a positive electrode;
the negative electrode for a lithium ion secondary battery according to claim 12; and
an electrolyte.

FIG. 1

FIG. 2

FIG. 3

FIG. 4A

16

10

20

FIG. 4B

16

10

12

20

## INTERNATIONAL SEARCH REPORT

| International application No. |
|---|
| PCT/JP2018/003286 |

**A. CLASSIFICATION OF SUBJECT MATTER**
Int.Cl. H01M4/48(2010.01)i, H01M4/36(2006.01)i, H01M4/38(2006.01)i

According to International Patent Classification (IPC) or to both national classification and IPC

**B. FIELDS SEARCHED**

Minimum documentation searched (classification system followed by classification symbols)
Int.Cl. H01M4/48, H01M4/36, H01M4/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-522139 A (ROBERT BOSCH GMBH) 28 July 2016, claims 1, 6, 7, paragraphs [0042]-[0067], fig. 5 & US 2016/0079591 A1, claims 1, 6, 7, paragraphs [0062]-[0093], fig. 5 & EP 2989671 A1 & CN 105409035 A | 2, 11-13<br>1, 3-10 |
| Y | WO 2015/080203 A1 (MITSUBISHI CHEMICAL CORP.) 04 June 2015, paragraphs [0018], [0034], [0065], [0348]-[0353], table 2 & US 2016/0276668 A1, paragraphs [0021], [0044]-[0045], [0512]-[0516], table 2 & EP 3076461 A1 & CN 105765772 A & KR 10-2016-0090338 A | 1, 4-13 |

☒ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April 2018 (23.04.2018) | 01 May 2018 (01.05.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/003286 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-86896 A (SANYO ELECTRIC CO., LTD.) 15 April 2010, paragraph [0052] & US 2010/0086848 A1, paragraph [0070] & KR 10-2010-0038068 A & CN 101714670 A | 1, 4-13 |
| Y | JP 2016-164884 A (TOYOTA INDUSTRIES CORP.) 08 September 2016, claims 4, 10, paragraphs [0043], [0049]-[0054] & US 2017/0084906 A1, claims 3, 12, paragraphs [0032], [0109]-[0114] | 2-13 |
| Y | JP 2015-210962 A (HITACHI CHEMICAL CO., LTD.) 24 November 2015, claims 1-7, paragraphs [0016]-[0017], [0090]-[0125] (Family: none) | 1-13 |
| Y | JP 2010-55775 A (SHIN-ETSU CHEMICAL CO., LTD.) 11 March 2010, claim 5, paragraph [0019] & US 2010/0055563 A1, claim 5, paragraphs [0058]-[0059] & CN 101662013 A & KR 10-2010-0024903 A | 1, 4-13 |
| A | WO 2016/147976 A1 (HITACHI CHEMICAL CO., LTD.) 22 September 2016 & CN 107408726 A | 1-13 |
| A | JP 2015-28855 A (OSAKA TITANIUM TECHNOLOGIES CO., LTD.) 12 February 2015 (Family: none) | 1-13 |
| A | WO 2015/159935 A1 (SHOWA DENKO KABUSHIKI KAISHA, UMICORE) 22 October 2015 & US 2017/0040610 A1 & EP 3133678 A1 & KR 10-2016-0126017 A & CN 106233511 A | 1-13 |
| A | JP 2015-167145 A (TOYOTA INDUSTRIES CORP.) 24 September 2015 & US 2014/0308588 A1 & US 2017/0084905 A1 & US 2017/0084906 A1 & WO 2013/069197 A1 | 1-13 |
| A | JP 2002-255530 A (SAMSUNG SDI CO., LTD.) 11 September 2002 & US 2002/0164479 A1 & KR 10-2002-0070764 A & CN 1374712 A | 1-13 |
| A | JP 2016-219410 A (HITACHI CHEMICAL CO., LTD.) 22 December 2016 (Family: none) | 1-13 |
| A | JP 2016-506029 A (LG CHEM, LTD.) 25 February 2016 & US 2016/0028085 A1 & WO 2015/065095 A1 & EP 2905832 A1 & KR 10-2015-0050504 A & CN 104813522 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3952180 B
- JP 4171897 B
- JP 2011090869 A
- JP 2017012745 W